(19) Europäisches Patentamt
European Patent Office
Office européen des brevets

(11) **EP 2 632 145 A1**

(12) **EUROPEAN PATENT APPLICATION**
published in accordance with Art. 153(4) EPC

(43) Date of publication:
**28.08.2013 Bulletin 2013/35**

(51) Int Cl.:
**H04N 5/21** (2006.01)  **G09G 3/20** (2006.01)
**G09G 5/00** (2006.01)  **G09G 5/36** (2006.01)
**G09G 5/391** (2006.01)

(21) Application number: **11845491.7**

(22) Date of filing: **28.11.2011**

(86) International application number:
**PCT/JP2011/077326**

(87) International publication number:
**WO 2012/073866 (07.06.2012 Gazette 2012/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2010 JP 2010267697**

(71) Applicant: **Sharp Kabushiki Kaisha
Osaka-shi, Osaka 545-8522 (JP)**

(72) Inventors:
• **MURAHASHI Yoshimitsu
Osaka 545-8522 (JP)**

• **GOHSHI, Seiichi
Osaka 545-8522 (JP)**
• **NUMAO, Takaji
Osaka 545-8522 (JP)**
• **SAWADA, Daiji
Osaka 545-8522 (JP)**

(74) Representative: **Müller-Boré & Partner
Patentanwälte
Grafinger Straße 2
81671 München (DE)**

(54) **SIGNAL PROCESSING DEVICE, SIGNAL PROCESSING METHOD, SIGNAL PROCESSING PROGRAM, AND DISPLAY DEVICE**

(57) A pixel interval determination unit and a noise reduction unit are included. The pixel interval determination unit determines, in accordance with information regarding a resolution of an input signal, a pixel interval to at least one pixel corresponding to at least one comparison signal that is contained in the input signal and is different from a target signal. The noise reduction unit reduces a noise component in the target signal in accordance with the target signal and the at least one comparison signal.

FIG. 3

**Description**

TECHNICAL FIELD

The present invention relates to a signal processing device, a signal processing method, a signal processing program, and a display device.
The present application claims priority to Japanese Patent Application No. 2010-267697 filed in the Japan Patent Office on November 30, 2010, the entire contents of which are incorporated herein by reference.

BACKGROUND ART

Conventionally, noise components (noise) such as so-called snow noise, Gaussian noise, or shot noise are mixed in an image signal or audio signal while image capturing, audio recording, transmission of data resulting from image capturing or audio recording, or the like is being carried out. For example, in the analog television broadcasting, noise components are mixed in an image signal while the image signal is being transmitted because the electronic field used in the analog television broadcasting is generally weak. Similarly, in a case where a recorded analog video is converted into a digital video and the digital video is rebroadcast, noise components are also mixed in an image signal.
A signal processing circuit that uses a 3-tap median filter in order to reduce these various types of noise is available (for example, PTL 1). Fig. 24 is a diagram illustrating the configuration of the signal processing circuit that uses a 3-tap median filter and that is disclosed in PTL 1. In this signal processing circuit, a noise level detection circuit 14 detects a noise level of an input signal TIN. A 3-tap median filter 13 applies a median filter to the input signal TIN to perform filtering. A delay circuit 12 delays the input signal TIN in accordance with a delay caused by the 3-tap median filter 13. A voltage comparison circuit 15 compares an output of the delay circuit 12 and an output of the 3-tap median filter 13 with each other. Based on the comparison result obtained by the voltage comparison circuit 15, a selective adder/subtracter circuit 18 adds the noise level detected by the noise level detection circuit 14 to or subtracts the noise level detected by the noise level detection circuit 14 from the output of the delay circuit 12, thereby generating an output signal TOUT.

CITATION LIST

[Patent Literature]

PTL 1: Japanese Unexamined Patent Application Publication No. 7-250264

DISCLOSURE OF INVENTION

Problems to be Solved by the Invention

However, appropriate tap intervals used to obtain the noise reduction effect in the signal processing circuit disclosed in PTL 1 possibly differs from one signal to another. Adjusting tap intervals is a complicated process for the user or designer, which is an issue.
The present invention has been made in view of such a circumstance, and an object of the present invention is to provide a signal processing device, a signal processing method, a signal processing program, and a display device that allow the noise reduction effect to be obtained in a process that is simple for the user or designer.

Means for Solving the Problems

(1) This invention has been made to address the aforementioned issue and an embodiment of the present invention is a signal processing device including a pixel interval determination unit configured to determine, in accordance with information regarding a resolution of an input signal, a pixel interval between a pixel corresponding to a target signal contained in the input signal and at least one pixel corresponding to at least one comparison signal that is contained in the input signal and is different from the target signal; and a noise reduction unit configured to reduce a noise component in the target signal in accordance with the target signal and the at least one comparison signal.

(2) Also, another embodiment of this invention is the above-described signal processing device in which the input signal is a signal that has undergone the upscaling.

(3) Also, another embodiment of this invention is the above-described signal processing device in which a resolution of the input signal is a horizontal resolution or vertical resolution of an image represented by the input signal.

(4) Also, another embodiment of this invention is the above-described signal processing device in which the at least one comparison signal is two signals or four signals.

(5) Also, another embodiment of this invention is the above-described signal processing device in which the pixel interval determination unit determines the pixel interval in accordance with an original resolution that is a resolution of the input signal before the input signal has undergone the upscaling and an output resolution that is a resolution of the input signal after the input signal has undergone the upscaling.

(6) Also, another embodiment of this invention is the above-described signal processing device that further includes an original resolution estimation unit configured to estimate the original resolution in accordance with a frequency distribution of the input signal.

(7) Also, another embodiment of this invention is the above-described signal processing device in which the input signal is a video signal, the original resolution estimation unit estimates the original resolution in accordance with a frequency distribution in a horizontal direction of an image represented by the input signal, and the pixel corresponding to the comparison signal is a pixel that is spaced apart from the pixel corresponding to the target signal in the horizontal direction.

(8) Also, another embodiment of this embodiment is the above-described signal processing device in which the input signal is a video signal, the original resolution estimation unit estimates the original resolution in accordance with a frequency distribution in a vertical direction of an image represented by the input signal, and the pixel corresponding to the comparison signal is a pixel that is spaced apart from the pixel corresponding to the target pixel in the vertical direction.

(9) Also, another embodiment of this invention is the above-described signal processing device in which the input signal is a video signal containing a luminance signal, the original resolution estimation unit estimates the original resolution in accordance with a frequency distribution of the luminance signal, and the noise reduction unit reduces a noise component in a luminance value of the target signal by using a luminance value of the comparison signal.

(10) Also, another embodiment of this invention is the above-described signal processing device in which the input signal is a video signal containing a color difference signal, the original resolution estimation unit estimates the original resolution in accordance with a frequency distribution of the color difference signal, and the noise reduction unit reduces a noise component in a color difference value of the target signal by using a color difference value of the comparison signal.

(11) Also, another embodiment of this invention is the above-described signal processing device in which the input signal is a video signal, and the pixel interval determination unit determines the pixel interval in accordance with a video format of the input signal in addition to the original resolution that is a resolution of the input signal before the input signal has undergone the upscaling and the output resolution that is a resolution of the input signal after the input signal has undergone the upscaling.

(12) In addition, another embodiment of this invention is a signal processing method including a first process of determining, with a pixel interval determination unit, in accordance with information regarding a resolution of an input signal, a pixel interval between a pixel corresponding to a target signal contained in the input signal and at least one pixel corresponding to at least one comparison signal that is contained in the input signal and is different from the target signal; and a second process of reducing, with a noise reduction unit, a noise component in the target signal in accordance with the target signal and the at least one comparison signal.

(13) Moreover, another embodiment of this invention is a signal processing program causing a computer to execute a pixel interval determination step of determining, in accordance with information regarding a resolution of an input signal, a pixel interval between a pixel corresponding to a target signal contained in the input signal and at least one pixel corresponding to at least one comparison signal that is contained in the input signal and is different from the target signal; and a noise reduction step of reducing a noise component in the target signal in accordance with the target signal and the at least one comparison signal.

(14) Furthermore, another embodiment of this invention is a display device including a pixel interval determination unit configured to determine, in accordance with information regarding a resolution of an input signal, a pixel interval between a pixel corresponding to a target signal contained in the input signal and at least one pixel corresponding to at least one comparison signal that is contained in the input signal and is different from the target signal; a noise reduction unit configured to reduce a noise component in the target signal in accordance with the target signal and the at least one comparison signal; and a display unit that displays an image represented by a signal obtained as a result of the noise reduction unit reducing the noise component.

Effects of the Invention

In accordance with this invention, the noise reduction effect may be obtained in a process that is simple for the user or designer.

BRIEF DESCRIPTION OF THE DRAWINGS

[Fig. 1] Fig. 1 is a schematic block diagram illustrating the configuration of a television receiver 1, which is a display device in accordance with a first embodiment of this invention.
[Fig. 2] Fig. 2 is a schematic block diagram illustrating the configuration of a video processing circuit 108 in accordance with the first embodiment.
[Fig. 3] Fig. 3 is a schematic block diagram illustrating the configuration of a signal processing circuit 123 in accordance with the first embodiment.
[Fig. 4] Fig. 4 is a schematic block diagram illustrating the configuration of a pixel interval determination unit 130 in accordance with the first embodiment.
[Fig. 5] Fig. 5 is a schematic block diagram illustrating the configuration of a representative value determination unit 133 in accordance with the first embodiment.
[Fig. 6] Fig. 6 is a schematic block diagram illustrating the configuration of a reduction computation unit 136 in accordance with the first embodiment.
[Fig. 7] Fig. 7 is a diagram describing an operation performed by the representative value determination unit 133 in accordance with the first embodiment.
[Fig. 8] Fig. 8 is a diagram describing an operation performed by a comparison unit 135 and the reduction computation unit 136 in accordance with the first embodiment.

[Fig. 9] Fig. 9 is a diagram illustrating an example of an input video signal I in accordance with the first embodiment.

[Fig. 10] Fig. 10 is a diagram illustrating an example of a signal U resulting from upscaling and an example of an output video signal O resulting from noise reduction in accordance with the first embodiment.

[Fig. 11] Fig. 11 is a schematic block diagram illustrating the configuration of a signal processing circuit 123a in accordance with a second embodiment of this invention.

[Fig. 12] Fig. 12 is a schematic block diagram illustrating the configuration of a representative value determination unit 133a in accordance with the second embodiment.

[Fig. 13] Fig. 13 is a schematic block diagram illustrating the configuration of a video processing circuit 123b in accordance with a third embodiment of this invention.

[Fig. 14] Fig. 14 is a schematic block diagram illustrating the configuration of a pixel interval determination unit 130b in accordance with the third embodiment.

[Fig. 15] Fig. 15 is a schematic block diagram illustrating the configuration of a representative value determination unit 133b in accordance with the third embodiment.

[Fig. 16] Fig. 16 is a schematic block diagram illustrating the configuration of a signal processing circuit 123c in accordance with a fourth embodiment of this invention.

[Fig. 17] Fig. 17 is a diagram illustrating an example of the contents stored in a constant memory unit 141c in accordance with the fourth embodiment.

[Fig. 18] Fig. 18 is a schematic block diagram illustrating the configuration of a signal processing circuit 123d in accordance with a fifth embodiment of this invention.

[Fig. 19] Fig. 19 is a schematic block diagram illustrating the configuration of a pixel interval determination unit 130d in accordance with the fifth embodiment.

[Fig. 20] Fig. 20 is a diagram describing an operation performed by an original resolution estimation unit 182d in accordance with the fifth embodiment.

[Fig. 21] Fig. 21 is a schematic block diagram illustrating the configuration of a signal processing circuit 123e in accordance with a sixth embodiment of this invention.

[Fig. 22] Fig. 22 is a schematic block diagram illustrating the configuration of a pixel interval determination unit 183e in accordance with the sixth embodiment.

[Fig. 23] Fig. 23 is a schematic block diagram illustrating the configuration of a noise reduction unit 131f in accordance with a seventh embodiment of this invention.

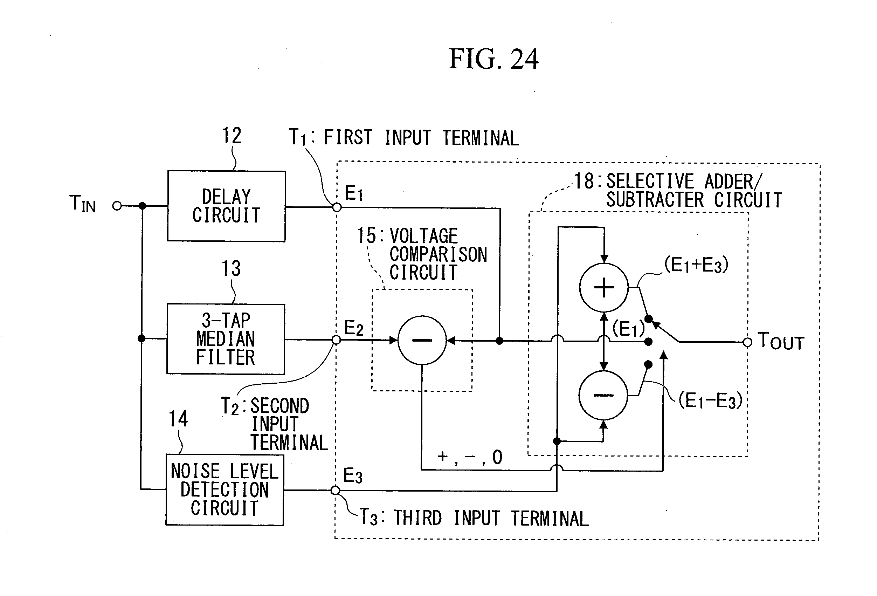

[Fig. 24] Fig. 24 is a diagram illustrating the configuration of a conventional signal processing circuit that uses a 3-tap median filter.

BEST MODE FOR CARRYING OUT THE INVENTION

[First Embodiment]

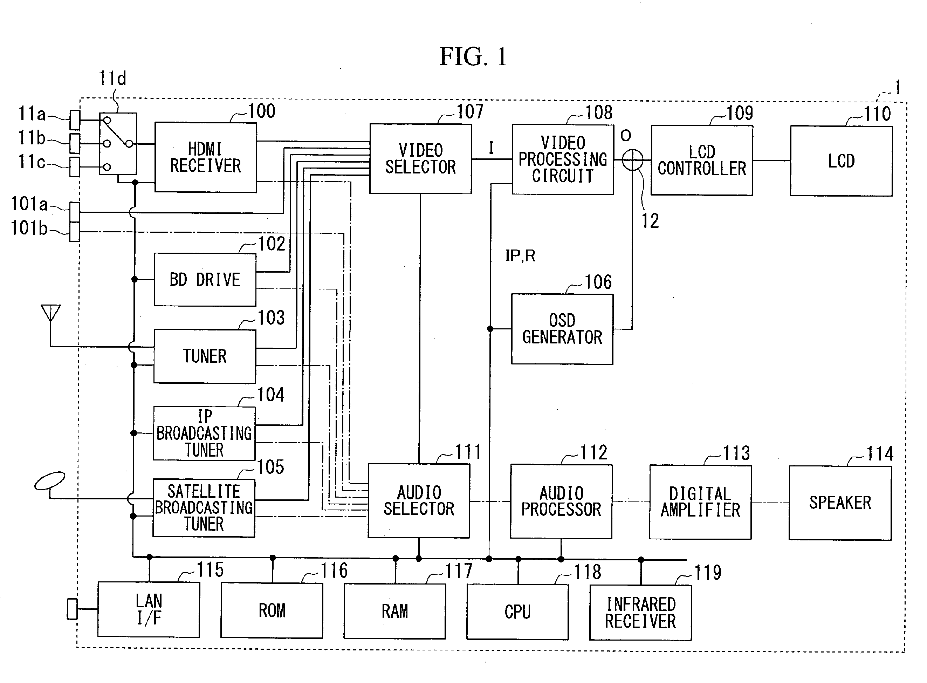

A first embodiment of the present invention will be described below with reference to the drawings. Fig. 1 is a schematic block diagram illustrating the configuration of a television receiver 1, which is a display device in accordance with this embodiment. The television receiver 1 includes HDMI (registered trademark) (High-Definition Multimedia Interface) input terminals 11a, 11b, and 11c; a switch 11d; an HDMI (registered trademark) receiver 100; a video input terminal 101a; an audio input terminal 101b; a BD (Blu-ray (registered trademark) Disc) drive 102; a tuner 103; an IP (Internet Protocol) broadcasting tuner 104; a satellite broadcasting tuner 105; an OSD (On Screen Display) generator 106; a video selector 107; a video processing circuit 108; a combiner 12; an LCD (Liquid Crystal Display) controller 109; an LCD 110; an audio selector 111; an audio processor 112; a digital amplifier 113; a speaker 114; a LAN I/F (Local Area Network Interface) 115; a ROM (Read Only Memory) 116; a RAM (Random Access Memory), a CPU (Central Processing Unit) 118; and an infrared receiver 119.

Each of the HDMI (registered trademark) input terminals 11a, 11b, and 11c is a terminal to which an HDMI (registered trademark) cable is to be connected and to which HDMI (registered trademark) video and audio signals are to be input from an external device, such as a hard disk recorder, which is connected thereto by an HDMI (registered trademark) cable. The switch 11d is a switch that selectively inputs one of outputs of the HDMI (registered trademark) input terminals 11a, 11b, and 11c to the HDMI (registered trademark) receiver 100. This switching is carried out in accordance with an instruction given by the CPU 118. The HDMI (registered trademark) receiver 100 communicates with an external device connected to the television receiver 1 by an HDMI (registered trademark) cable so as to receive HDMI (registered trademark) video and audio signals. The video input terminal 101 a is a terminal to which a video cable is to be connected and to which a video signal, such as an NTSC (National Television System Committee) signal, is to be input from an external device, such as a hard disk recorder, which is connected thereto by a video cable. The audio input terminal 101b is a terminal to which an audio cable is to be connected and to which an audio signal is to be input from an external device, such as a hard disk recorder, which is connected thereto by an audio cable.

The BD drive 102 reads a video signal and an audio signal from a Blu-ray Disc inserted into the BD drive 102. The tuner 103 is connected to an antenna that receives terrestrial broadcasting. The tuner 103 receives a signal of terrestrial television broadcasting, and demodulates the received signal so as to obtain a video signal and an audio signal. The IP broadcasting tuner 104 extracts a video signal and an audio signal from IP packets of IP broadcasting that is received by the LAN I/F 115. The satellite broadcasting tuner 105 is connected to an antenna that receives satellite broadcasting. The satellite broadcasting tuner 105 receives a signal of satellite television broadcasting, and demodulates the received signal so as to obtain a video signal and an audio signal. The OSD generator 106 generates a signal of a video, such as a source of a video to be displayed, to be superposed onto a video that is displayed as the content when the setting state of the television receiver 1 is displayed.

In accordance with an instruction given by the CPU 118, the video selector 107 selects a to-be-displayed video signal from among video signals output by the HDMI (registered trademark) receiver 100, the video input terminal 101a, the BD drive 102, the tuner 103, the IP broadcasting tuner 104, and the satellite broadcasting tuner 105. The video selector 107 then outputs the selected video signal to the video processing circuit 108. The video processing circuit 108 converts the video signal (an input video signal I) selected by the video selector 107 so as to have a signal format and a resolution that are suited to displaying the video signal on the LCD 110. The video processing circuit 108 further performs a noise reduction process on the resulting signal so as to generate an output video signal O. Types of the signal format include an interlaced format and a progressive format. In a case where the video signal selected by the video selector 107 is interlaced, the video processing circuit 108 converts the signal into a progressive signal. In a case where the video signal selected by the video selector 107 is progressive, the signal is not subjected to the conversion process. Also, a resolution suited to displaying the video signal on the LCD 110 is a resolution of the LCD 110, which is higher than that of the input video signal I. Thus, the video processing circuit 108 converts the input video signal I into a signal having a higher resolution. Also, I/P identification information IP which indicates whether the input video signal I is interlaced or progressive and resolution information R which contains a resolution Rx of a video represented by the input video signal I and a resolution Ru of a video represented by the output video signal O are input to the video processing circuit 108 from the CPU 118. The video processing circuit 108 uses these pieces of information when it performs conversion.

The combiner 12 generates a signal for a video in which a video represented by the signal generated by the OSD generator 106 is superposed on a video represented by the output video signal O generated by the video processing circuit 108. The LCD controller 109 adjusts aperture ratios of individual pixels of the LCD 110 in accordance with the signal generated by the combiner 12 so as to display the video represented by the signal generated by the combiner 12 on the LCD 110. The LCD 110 is a liquid crystal display and displays a video under control of the LCD controller 109.

In accordance with an instruction given by the CPU 118, the audio selector 111 selects a to-be-output audio signal from among audio signals output by the HDMI (registered trademark) receiver 100, the audio input terminal 101b, the BD drive 102, the tuner 103, the IP broadcasting tuner 104, and the satellite broadcasting tuner 105. The audio selector 111 then outputs the selected audio signal to the audio processor 112. The audio processor 112 converts the audio signal selected by the audio selector 111 so as to have a signal format suited for the digital amplifier 113 to handle the audio signal. The digital amplifier 113 amplifies the audio signal resulting from conversion performed by the audio processor 112, and outputs the resulting audio signal to the speaker 114. The speaker 114 outputs sound represented by the audio signal output by the digital amplifier 113.

A LAN cable, such as a UTP (Unshielded Twisted Pair) cable, is to be connected to the LAN I/F 115. The LAN I/F 115 receives packets of IP broadcasting that are output by an external device, such as an IP broadcasting distribution server, connected thereto by a LAN cable. The ROM (Read Only Memory) 116 is a read only memory that stores programs and data used in operation of the CPU 118. The RAM (Random Access Memory) 117 is a readable and rewritable memory that is used as a working memory when the CPU 118 operates. The CPU 118 is a central processing unit that controls the entirety of the television receiver 1. The CPU 118 is connected to the HDMI (registered trademark) receiver 100, the switch 11d, the BD drive 102, the tuner 103, the IP broadcasting tuner 104, the satellite broadcasting tuner 105, the OSD generator 106, the video selector 107, the video processing circuit 108, the audio selector 111, the audio processor 112, the LAN I/F 115, the ROM 116, the RAM 117, and the infrared receiver 119 via buses. The infrared receiver 119 receives a signal transmitted from a remote control that is used by the user to operate the television receiver 1.

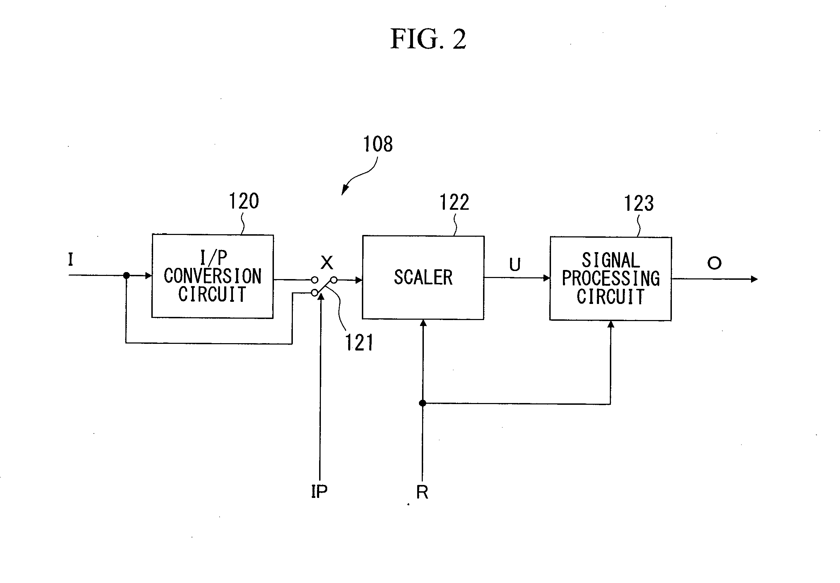

Fig. 2 is a schematic block diagram illustrating the configuration of the video processing circuit 108 in accordance with this embodiment.

The video processing circuit 108 includes an I/P conversion circuit 120, a switch 121, a scaler 122, and a signal processing circuit 123. The I/P conversion circuit 120 converts the input video signal I into a progressive video signal on the assumption that the input video signal I is an interlaced video signal, and outputs the resulting progressive video signal. In a case where the I/P identification information IP input thereto from the CPU 118 indicates the interlaced format, the switch 121 connects an output of the I/P conversion circuit 120 to the scaler 122. In a case where the I/P identification information IP input thereto from the CPU 118 indicates the progressive format, the switch 121 connects an output (the input video signal I) of the video selector 107 to the scaler 122. Note that the signal output from the switch 121 to the scaler 122 is hereinafter referred to as a signal X.

In accordance with the resolution information R received from the CPU 118, the scaler 122 performs conversion (upscaling) on the signal X input from the switch 121, so that the resolution Rx (original resolution) of a video represented by the input video signal I is converted into the resolution Ru (output resolution) of a video represented by the output video signal O. The scaler 122 then outputs the conversion result as a signal U. Note that the output resolution Ru is a resolution of the LCD 110, which is higher than the original resolution Rx herein. Also, the scaler 122 uses, for example, a Lanczos filter to perform resolution conversion. The signal processing circuit 123 is a signal processing device in accordance with this embodiment. By using the resolution information R input thereto from the CPU 118, the signal processing circuit 123 performs noise reduction on the video signal U resulting from conversion performed by the scaler 122, thereby generating the output video signal O.

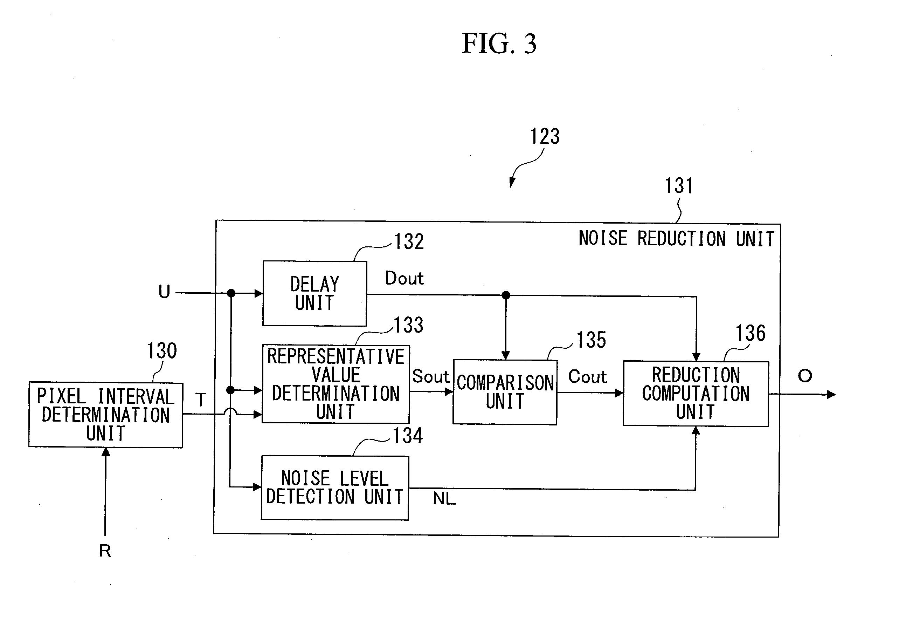

Fig. 3 is a schematic block diagram illustrating the configuration of the signal processing circuit 123. The signal processing circuit 123 includes a pixel interval determination unit 130 and a noise reduction unit 131. The noise reduction unit 131 includes a delay unit 132, a representative value determination unit 133, a noise level detection unit 134, a comparison unit 135, and a reduction computation unit 136.

The pixel interval determination unit 130 determines a sampling position T by using the resolution information R input thereto from the CPU 118. The sampling position T indicates a pixel interval between a target pixel to be subjected to noise reduction performed by the noise reduction unit 131 and a comparison pixel that is different from the target pixel. Note that, in this embodiment, the sampling position T is constituted by two values: a left sampling position Tp and a right sampling position Tn. However, the left sampling position Tp and the right sampling position Tn may be set to have the same value, so that the sampling position T is constituted by one value.

Specifically, in accordance with information on a resolution of an input signal (for example, the signal U resulting from upscaling), the pixel interval determination unit 130 determines a pixel interval between a pixel corresponding to a target signal that is contained in the input signal and at least one pixel corresponding to at least one comparison signal that is contained in the input signal and is different from the target signal. Note that the target signal is a signal representing a pixel value of a target pixel. Also, the comparison signal is a signal representing a pixel value of a comparison pixel. In addition, in this embodiment, the number of the at least one comparison signal is, for example, two. The noise reduction unit 131 reduces a noise component in the target signal in accordance with the target signal and the at least one comparison signal.

The delay unit 132 delays the signal U by an amount equal to a delay caused in the signal by the representative value determination unit 133, and outputs the resulting signal as a signal Dout. In a case where the representative value determination unit 133 has a configuration described later, the amount of delay caused by the delay unit 132 is equal to the maximum number of pixels that the right sampling position Tn can take. Alternatively, the delay unit 132 may be omitted and a pixel value $X_0$ of the target pixel obtained in the representative value determination unit 133 may be used instead of the signal Dout.

The representative value determination unit 133 determines a representative value Sout, in accordance with the pixel value of the target pixel of the signal U and pixel values of pixels located at the sampling position T determined by the pixel interval determination unit 130. In this embodiment, the sampling position is constituted by the left sampling position Tp and the right sampling position Tn. The representative value determination unit 133 selects a median value from among the pixel value of the target pixel and pixel values of two comparison pixels which are spaced apart from the target pixel by these sampling positions in the horizontal direction, and sets this selected median value as the representative value Sout. Note that the signal U contains a luminance signal U(Y), a red color difference signal U(Cr), and a blue color difference signal U(Cb). The representative value determination unit 133 selects the median value for each of the three kinds of pixel values, which are the pixel values represented by the luminance signal, the pixel values represented by the red color difference signal U(Cr), and the pixel values represented by the blue color difference signal U(Cb). The noise level detection unit 134 detects a noise level NL of the signal U by using a blanking interval of the signal U. Note that the noise level detection unit 134 detects the noise level for each of the luminance signal U(Y), the red color difference signal U(Cr), and the blue color difference signal U(Cb).

The comparison unit 135 compares the signal Dout output by the delay unit 132 and the representative value Sout determined by the representative value determination unit 133 with each other, and outputs a comparison result Cout to the reduction computation unit 136. Specifically, the comparison unit 135 compares the signal Dout and the representative value Sout with each other and determines the comparison result Cout in accordance with Expression (1) below. That is, in a case where the signal Dout is greater than the representative value Sout, the comparison unit 135 outputs "+1" as the comparison result Cout. In a case where the signal Dout is equal to the representative value Sout, the comparison unit 135 outputs "0" as the comparison result Cout. In a case where the signal Dout is smaller than the representative value Sout, the comparison unit 135 outputs "-1" as the comparison result Cout. Note that the comparison unit 135 performs this comparison for each of the luminance signal, the blue color difference signal, and the red color difference signal.

[Expression 1]

$$if(\ Dout\ >\ Sout\ )\rightarrow Cout=+1$$
$$if(\ Dout==Sout\ )\rightarrow Cout=\ 0 \qquad \cdots(1)$$
$$if(\ Dout\ <\ Sout\ )\rightarrow Cout=-1$$

In a case where the comparison result Cout indicates that the signal Dout is greater than the representative value Sout, the reduction computation unit 136 subtracts the noise level NL from the signal Dout so as to generate the output video signal O. In a case where the comparison result Cout indicates that the signal Dout is equal to the representative value Sout, the reduction computation unit 136 uses the signal Dout as the output video signal O. In a case where the comparison result Cout indicates that the signal Dout is smaller than the representative value Sout, the reduction computation unit 136 adds the noise level NL to the signal Dout so as to generate the output video signal O. Note that the reduction computation unit 136 performs this computation for each of the luminance signal, the blue color difference signal, and the red color difference signal.

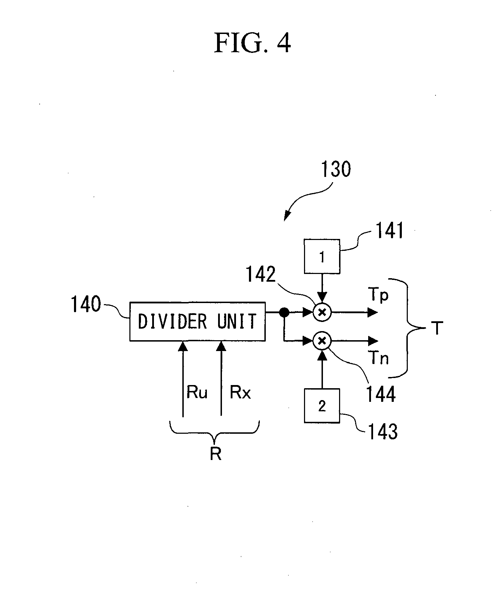

Fig. 4 is a schematic block diagram illustrating the configuration of the pixel interval determination unit 130. The pixel interval determination unit 130 includes a divider unit 140, a constant memory unit 141, a multiplier unit 142, a constant memory unit 143, and a multiplier unit 144. The divider unit 140 is supplied, as the resolution information R, with the original resolution Rx and the output resolution Ru by the CPU 118, and outputs the result obtained by dividing the output resolution Ru by the original resolution Rx. Note that, in this embodiment, the original resolution Rx indicates the number of pixels arranged in the horizontal direction (traverse direction) in an image represented by the input video signal I, whereas the output resolution Ru indicates the number of pixels arranged in the horizontal direction (traverse direction) in an image represented by the output video signal O.

The constant memory unit 141 stores a preset constant. In this example, the constant memory unit 141 stores "1". The multiplier unit 142 multiplies the computation result obtained by the divider unit 140 by the constant stored in the constant memory unit 141, and outputs the resulting value as the left sampling position Tp. The constant memory unit 143 stores a preset constant. In this example, the constant memory unit 143 stores "2". The multiplier unit 144 multiplies the computation result obtained by the divider unit 140 by the constant stored in the constant memory unit 143, and outputs the resulting value as the right sampling position Tn. Desirably the constant stored in the constant memory unit 141 and the constant stored in the constant memory 143 are set in accordance with how many pixels at which each noise is mixed in a video input as the input video signal I. For example, if the input video signal I represents a video having a sufficiently low resolution, noise remains within one pixel at this resolution of the input video image signal I. Thus, the value desirable as each of these constants is "1".

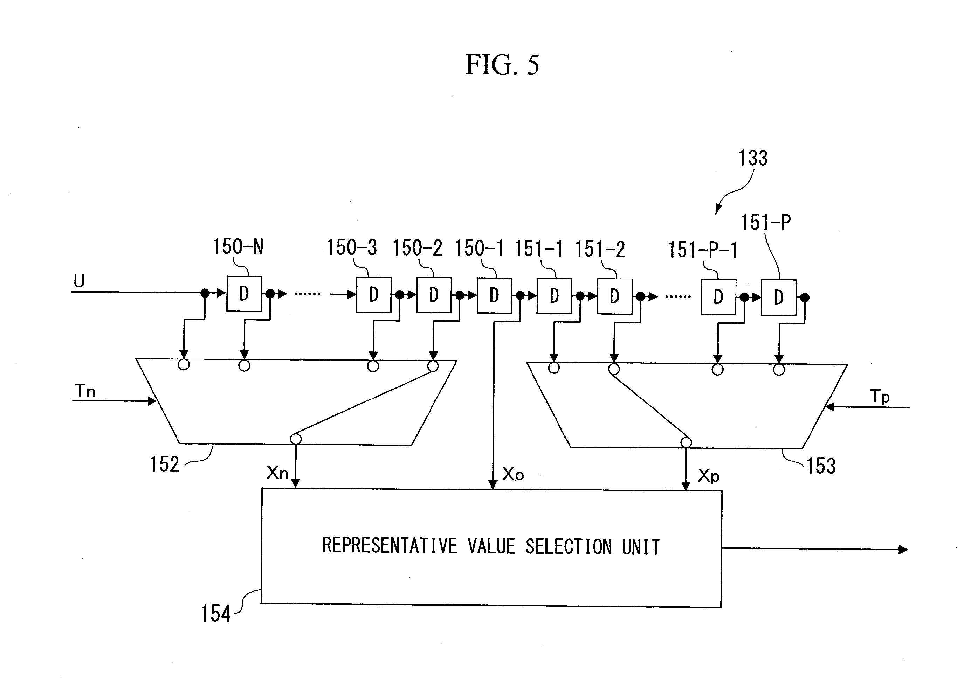

Fig. 5 is a schematic block diagram illustrating the configuration of the representative value determination unit 133. The representative value determination unit 133 includes data delay units 150-1 to 150-N and 151-1 to 151-P, switches 152 and 153, and a representative value selection unit 154. The data delay units 150-1 to 150-N and 151-1 to 151-P each delay the input signal by an amount equivalent to one pixel. The data delay units 150-1 to 150-N and 151-1 to 151-P are connected with each other in the order of the data delay units 151-P, 151-P-1, ···, 151-2, 151-1, 150-1, 150-2, 150-3, ···, 150-N such that the data delay unit 151-P is supplied with an output of the data delay unit 151-P-1, the data delay unit 151-P-1 is supplied with an output of the data delay unit 151-P-2, and so forth. Note that the data delay unit 150-N is supplied with the signal U.

An output of the data delay unit 150-1 is the pixel value $X_0$ of the target pixel. The switch 152 selects a signal Xn to be output to the representative value selection unit 154 from among the signal U and outputs of the data delay units 150-2 to 150-N, in accordance with the right sampling position Tn. Specifically, the switch 152 selects a signal of a pixel which is spaced apart from the target pixel by the number of pixels represented by the right sampling position Tn and which is to the right of the target pixel, that is, a signal with a delay amount which is less than the delay amount of the target pixel by the number of pixels represented by the right sampling position Tn. For example, the switch 152 selects an output of the data delay unit 150-2 in a case where the right sampling position Tn is "1", an output of the data delay unit 150-3 in a case where the right sampling position Tn is "2", ···, an output of the data delay unit 150-N in a case where the right sampling position Tn is "N-1", or the signal U in a case where the right sampling position Tn is "N". Note that N is the maximum value that the right sampling position Tn can take and is set by the designer in accordance with which kind of signal can be used as the input video signal I.

The switch 153 selects a signal Xp to be output to the representative value selection unit 154 from among outputs of the data delay units 151-1 to 151-P, in accordance with the left sampling position Tp. Specifically, the switch 153 selects a signal which is spaced apart from the target pixel by the number of pixels represented by the left sampling position Tp and which is to the left of the target pixel, that is, a signal with a delay amount which is greater than the delay amount of the target pixel by the number of pixels represented by the left sampling position Tp. For example, the switch 153 selects the output of the data delay unit 151-1 in a case where the left sampling position Tp is "1", the output of the data delay unit 151-2 in a case where the left sampling position Tp is "2", ⋯, or the output of the data delay unit 151-P in a case where the left sampling position Tp is "P". Note that P is the maximum value that the left sampling position Tp can take and is set by the designer in accordance with which kind of signal can be used as the input video signal I.

The representative value selection unit 154 selects the representative value Sout in accordance with Expression (2) below. Specifically, the representative value selection unit 154 selects, as the representative value Sout, a median value from among the signals Xp, $X_0$, and Xn.

[Expression 2]

$$if(\ (Xp>X_0\ \&\&\ X_0>Xn)\ ||\ (Xn>=X_0\ \&\&\ X_0>=Xp)\ )\rightarrow Sout=X_0$$
$$if(\ (Xp>Xn\ \&\&\ Xn>X_0)\ ||\ (X_0>=Xn\ \&\&\ Xn>=Xp)\ )\rightarrow Sout=Xn \qquad \cdots (2)$$
$$if(\ (X_0>Xp\ \&\&\ Xp>Xn)\ ||\ (Xn>=Xp\ \&\&\ Xp>=X_0)\ )\rightarrow Sout=Xp$$

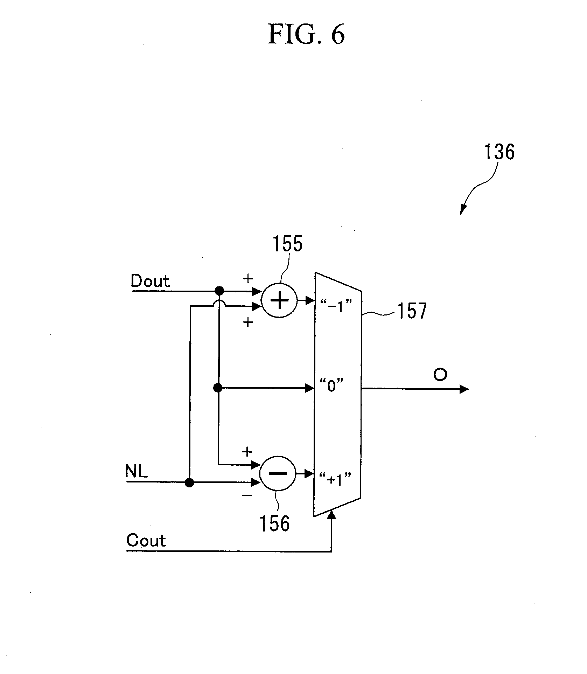

Fig. 6 is a schematic block diagram illustrating the configuration of the reduction computation unit 136. The reduction computation unit 136 includes an adder unit 155, a subtracter unit 156, and a selector unit 157. The adder unit 155 adds the noise level NL to the signal Dout. The subtracter unit 156 subtracts the noise level NL from the signal Dout. The selector unit 157 selects, as the output video signal O, one of the computation result obtained by the adder unit 155, the signal Dout, and the computation result obtained by the subtracter unit 156, in accordance with the comparison result Cout. Specifically, the selector unit 157 selects, as the output video signal O, the computation result obtained by the adder unit 155 in a case where the comparison result Cout is "-1" which indicates that the signal Dout is smaller than the representative value Sout.

Alternatively, the selector unit 157 selects, as the output video signal O, the signal Dout in a case where the comparison result Cout is "0" which indicates that the signal Dout is equal to the representative value Sout. Also, the selector unit 157 selects, as the output signal O, the computation result obtained by the subtracter unit 156 in a case where the comparison result Cout is "1" which indicates that the signal Dout is greater than the representative value Sout.

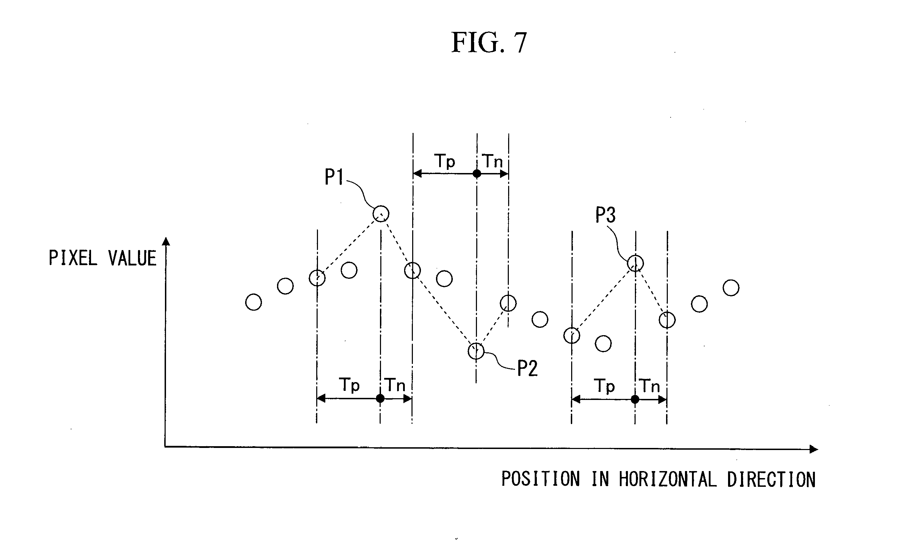

Fig. 7 is a diagram describing an operation performed by the representative value determination unit 133. In Fig. 7, the horizontal axis denotes a position in the horizontal direction of an image represented by the signal U resulting from upscaling performed by the scaler 122, whereas the vertical axis denotes the pixel value (for example, the luminance, the blue color difference, or the red color difference). A graph illustrated in Fig. 7 is an example in which pixel values of the signal U that are arranged in one horizontal line are plotted. Now, an operation performed by the representative value determination unit 133 in a case where the pixel interval determination unit 130 has set the left sampling position Tp to "2" and the right sampling position Tn to "1" will be described.

Because the left sampling position Tp is "2", the switch 153 selects the output of the data delay unit 151-2. Also, because the right sampling position Tn is "1", the switch 152 selects the output of the data delay unit 150-2. The graph of Fig. 7 is now referred to for this operation. In a case where the target pixel is a pixel assigned a reference numeral P1, the switch 153 outputs the pixel value Xp of a pixel which is spaced apart from P1 by the left sampling position Tp and which is to the left of P1, that is, a pixel which is spaced apart from P1 by 2 pixels and which is to the left of P1. Also, the switch 152 outputs the pixel value Xn of a pixel which is spaced apart from P1 by the right sampling position Tn and which is to the right of P1, that is, a pixel which is spaced apart from P1 by one pixel and which is to the right of P1.

Then, the representative value selection unit 154 selects, as the representative value Sout, a median value (in this case, the pixel value Xn) from among these values. Similarly, in a case where the target pixel is a pixel assigned a reference numeral P2 or P3, the representative value selection unit 154 selects, as the representative value Sout, the pixel value Xn of the pixel which is spaced apart from the target pixel by one pixel and which is to the right of the target pixel, the pixel value Xn being the median value.

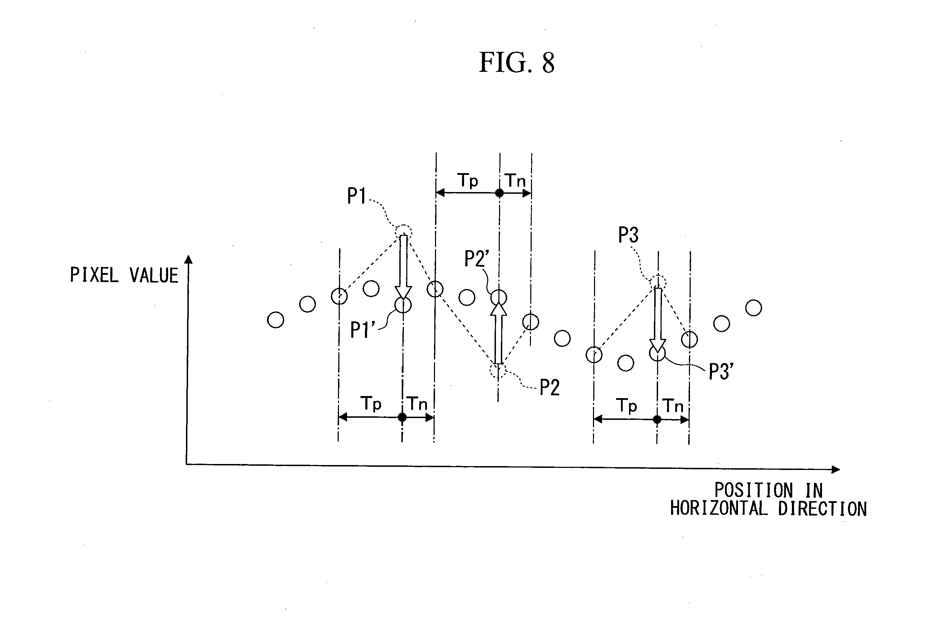

Fig. 8 is a diagram describing an operation performed by the comparison unit 135 and the reduction computation unit 136. In Fig. 8, the horizontal axis denotes a position in the horizontal direction of the image represented by the output video signal O resulting from noise reduction performed by the reduction computation unit 136, whereas the vertical axis denotes the pixel value (for example, the luminance, the blue color difference, or the red color difference). A graph illustrated in Fig. 8 is an example in which pixels values of the output video signal O that are located at positions that coincide with the corresponding positions of Fig. 7 are plotted. Also, the length of a thick arrow denotes the noise level NL.

In a case where the target pixel is the pixel assigned the reference P1, the comparison unit 135 compares the pixel value of P1 that is represented by the signal Dout output by the delay unit 132 with the pixel value Xn of the pixel which is spaced apart from the target pixel by one pixel and which is to the right of the target pixel, the pixel value Xn being represented by the signal Sout output by the representative value determination unit 133. In this case, because the pixel value of P1 is greater than the pixel value Xn, the comparison unit 135 outputs "1" as the comparison result Cout. Because the comparison result Cout is "1", the reduction computation unit 136 subtracts the noise level NL from the pixel value of P1 represented by the signal Dout. Ultimately, the reduction computation unit 136 outputs a resulting pixel value assigned a reference numeral P1' in Fig. 8.

In a case where the target pixel is the pixel assigned the reference numeral P2, the pixel value of P2 is smaller among the pixel value of P2 and the pixel value Xn of the pixel which is spaced apart from P2 by one pixel and which is to the right of the target pixel. Thus, the comparison unit 135 outputs "-1" as the comparison result Cout. Because the comparison result Cout is "-1", the reduction computation unit 136 adds the noise level NL to the pixel value of P2 represented by the signal Dout. Ultimately, the reduction computation unit 136 outputs a resulting pixel value assigned a reference numeral P2' in Fig. 8. Also, in a case where the target pixel is the pixel assigned the reference numeral P3, the reduction computation unit 136 subtracts the noise level NL from the pixel value of P3 as in the case of P1, and ultimately outputs a resulting pixel value assigned a reference numeral P3' in Fig. 8.

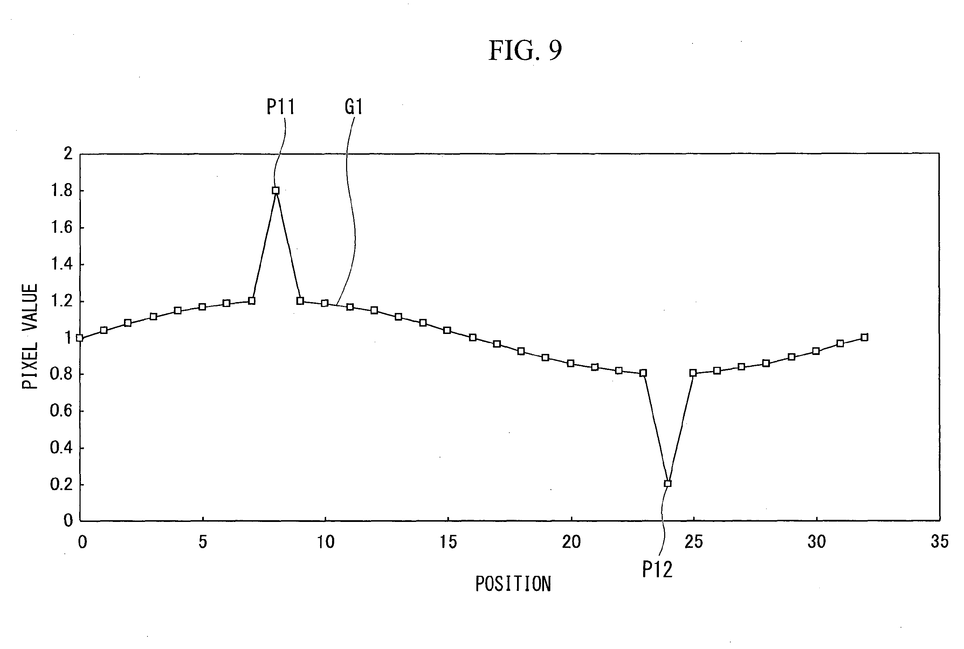

Fig. 9 is a diagram illustrating an example of the input video signal I. In Fig. 9, the horizontal axis denotes a position in the horizontal direction of the image represented by the input video signal I, whereas the vertical axis denotes the pixel value (for example, the luminance, the blue color difference, or the red color difference). A graph G1 illustrated in Fig. 9 is an example in which pixel values of the input video signal I that are arranged in one horizontal line are plotted. In Fig. 9, pixel values of pixels affected by noise such as pixels assigned reference numerals P11 and P12 protrude upwardly or downwardly as compared with those of neighboring pixels. Also, in a case where the input video signal I has a low resolution, noise often remains within one pixel and is rarely mixed at a plurality of pixels.

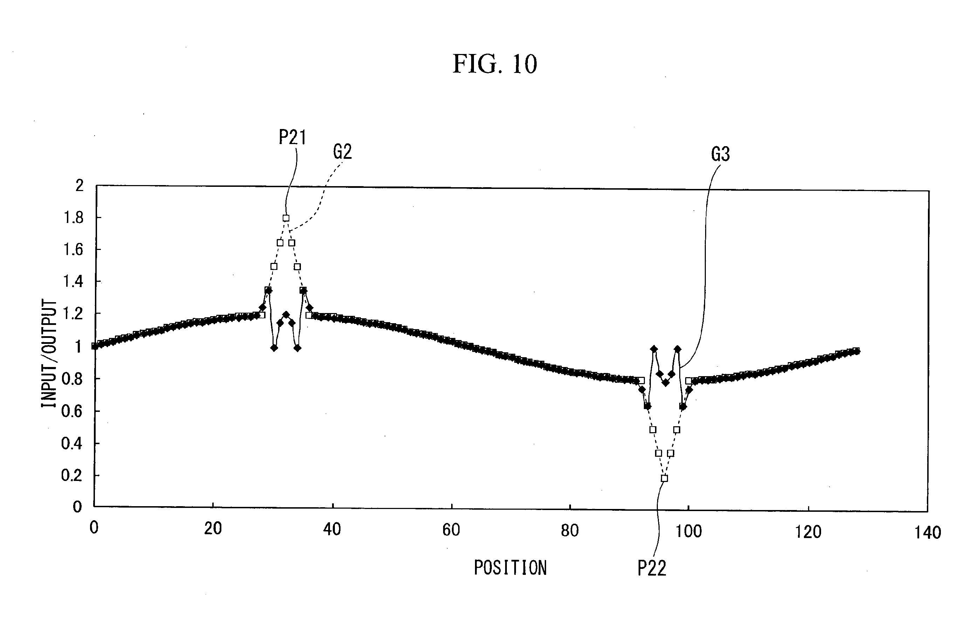

Fig. 10 is a diagram illustrating an example of the signal U resulting from upscaling and an example of the output video signal O resulting from noise reduction. In Fig. 10, the horizontal axis denotes a position in the horizontal direction of images represented by the signal U and the output video signal O, whereas the vertical axis denotes the pixel value (for example, the luminance, the blue color difference, or the red color difference). A graph G2 illustrated in Fig. 10 is an example in which pixel values of the signal U that are located at positions that coincide with the corresponding positions of Fig. 9 are plotted. Note that the signal U is a signal obtained by upscaling the input video signal I to four times the original resolution. Also, a graph G3 is an example in which pixel values of the output video signal O that are located at positions that coincide with the corresponding positions of Fig. 9 are plotted. Note that the constant stored in each of the constant memory units 141 and 143 is "1.25" in the example of the graph G3.

Noise, which remains within each of the pixels assigned the reference numerals P11 and P12 in Fig. 9, no longer remains within each of pixels assigned reference numerals P21 and P22 of the signal U as a result of the input video signal I being upscaled to four times the original resolution, and consequently affects pixels which are spaced apart from each of the pixels P21 and P22 by up to three pixels and which are on both sides. The input video signal is upscaled to four times the original resolution. Thus, the value obtained by dividing the output resolution Ru by the original resolution Rx in the divider unit 140 of the pixel interval determination unit 130 is "4". The sampling positions Tp and Tn, which are obtained by multiplying this obtained value by the constant "1.25" stored in the constant memory units 141 and 143, respectively, are "5". Consequently, the sampling positions Tp and Tn indicate positions beyond a range affected by the noise. Thus, subtraction or addition of the noise level NL is performed not only on the pixels assigned the reference numerals P21 and P22 but also pixels which are spaced apart from each of the pixels P21 and P22 by two pixels.

Because the pixel interval determination unit 130 determines the sampling position in accordance with the resolution information R in this way, adjusting the sampling position is no longer needed. Thus, the noise reduction effect may be obtained in a process that is simple for the user or designer.

[Second Embodiment]

A second embodiment of the present invention will be described below with reference to the drawings. In the first embodiment, noise reduction is performed after comparing pixel values of pixels arranged in the horizontal direction. In this embodiment, however, noise reduction is performed after comparing pixel values of pixels arranged in the vertical direction. The television receiver 1, which is a display device in accordance with this embodiment, differs from the television receiver 1 illustrated in Fig. 1 only in that the television receiver 1 of this embodiment includes a signal processing circuit 123a instead of the signal processing circuit 123.

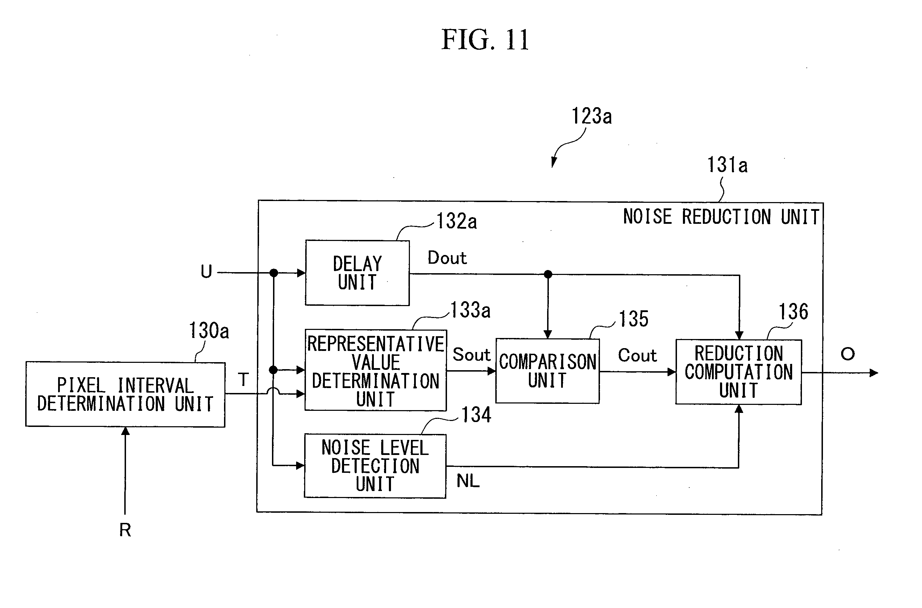

Fig. 11 is a schematic block diagram illustrating the configuration of the signal processing circuit 123a. In Fig. 11, components corresponding to respective components illustrated in Fig. 3 are assigned identical reference numerals (134 to 136) and description thereof is omitted. The signal processing circuit 123a includes a pixel interval determination unit 130a and a noise reduction unit 131 a. The pixel interval determination unit 130a has a configuration similar to that of the pixel interval determination unit 130 but differs from the pixel interval determination unit 130 in that the pixel interval determination unit 130a uses vertical resolutions as the resolution information R. Specifically, the pixel interval determination unit 130a calculates the sampling position T by using a vertical resolution (original resolution Rx') of the input video signal I and a vertical resolution (output resolution Ru') of the signal U. Note that, in this embodiment, the sampling position T to be output is constituted by a lower sampling position Tn and an upper sampling position Tp.

A delay unit 132a delays the signal U by an amount equal to a delay of the signal caused by a representative value determination unit 133a, and outputs the resulting signal as the signal Dout. In a case where the representative value determination unit 133a has a configuration described later, the amount of delay caused by the delay unit 132a is equal to the maximum number of lines that the lower sampling position Tn can take. Alternatively, the delay unit 132a may be omitted and the pixel value $X_0$ of the target pixel obtained in the representative value determination unit 133a may be used instead of the signal Dout.

The representative value determination unit 133a determines the representative value Sout, in accordance with the pixel value of the target pixel of the signal U and pixel values of pixels located at the sampling position T determined by the pixel interval determination unit 130a.
In this embodiment, the sampling position is constituted by the upper sampling position Tp and the lower sampling position Tn. The representative value determination unit 133a selects a median value from among the pixel value of the target pixel and pixel values of two pixels which are spaced apart from the target pixel by these sampling positions in the vertical direction, and sets this selected median value as the representative value Sout.

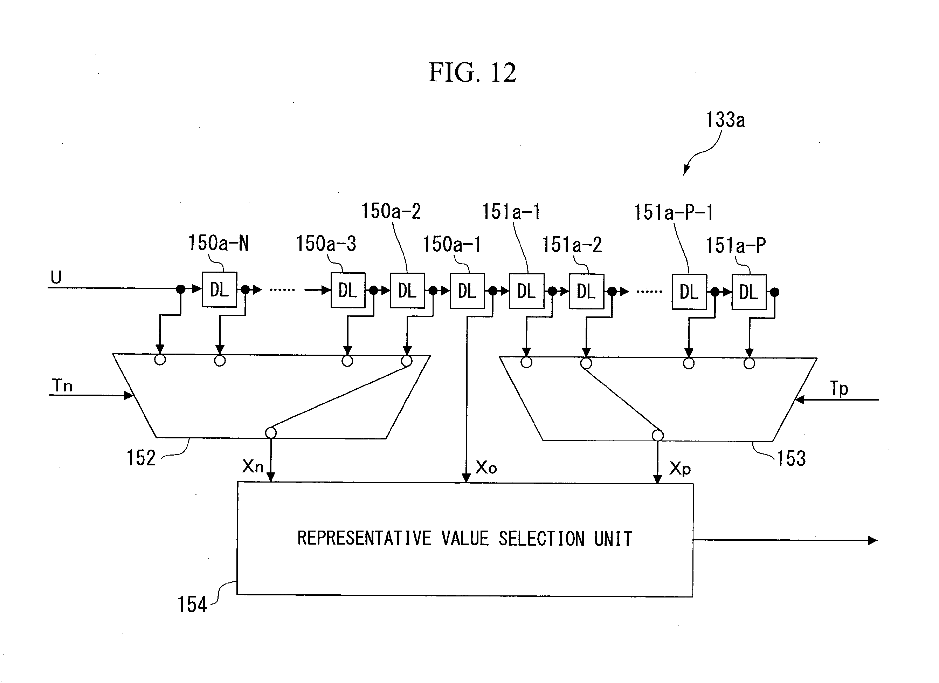

Fig. 12 is a schematic block diagram illustrating the configuration of the representative value determination unit 133a. In Fig. 12, components corresponding to respective components illustrated in Fig. 5 are assigned identical reference numerals (152 to 154) and description thereof is omitted. The representative value determination unit 133a differs from the representative value determination unit 113 illustrated in Fig. 5 only in that the representative value determination unit 133a includes line delay units 150a-1 to 150a-N and 151a-1 to 151a-P instead of the data delay units 150-1 to 150-N and 151-1 to 151-P. Each of the line delay units 150a-1 to 150a-N and 151a-1 to 151a-P delays the signal input thereto by an amount equivalent to one horizontal line.

Even in a case where pixel values of pixels arranged in the vertical direction are compared and noise reduction is performed, the pixel interval determination unit 130a determines the vertical sampling position in accordance with the resolution information R in this way Thus, adjusting the sampling position is no longer needed. As a result, the noise reduction effect may be obtained in a process that is simple for the user or designer.

[Third Embodiment]

A third embodiment of the present invention will be described below with reference to the drawings. The television receiver 1, which is a display device in accordance with this embodiment, differs from the television receiver 1 illustrated in Fig. 1 only in that the television receiver 1 of this embodiment includes a signal processing circuit 123b instead of the signal processing circuit 123.

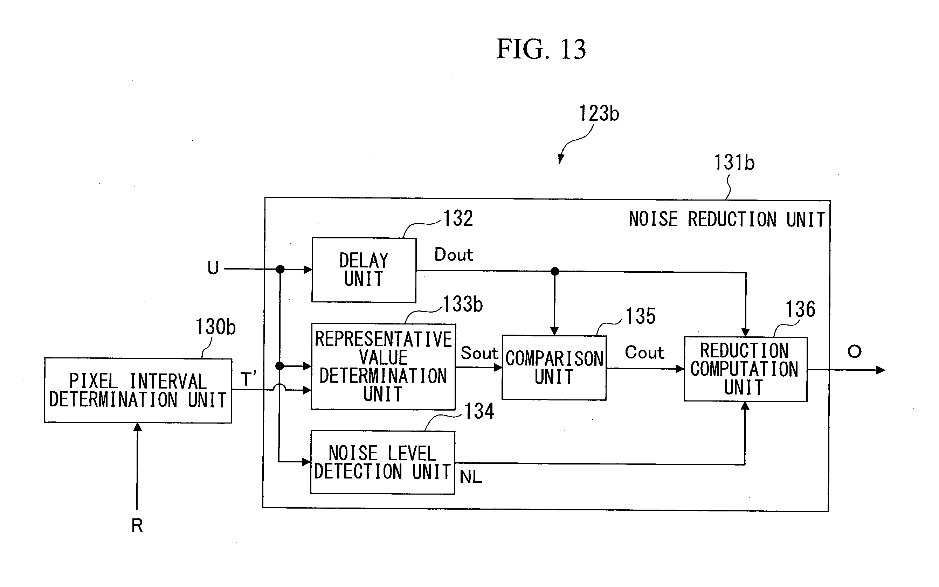

Fig. 13 is a schematic block diagram illustrating the configuration of a video processing circuit 123b. In Fig. 13, components corresponding to respective components illustrated in Fig. 3 are assigned identical reference numerals (132 and 134 to 136) and description thereof is omitted. The signal processing circuit 123b includes a pixel interval determination unit 130b and a noise reduction unit 131b. The noise reduction unit 131b differs from the noise reduction unit 131 illustrated in Fig. 3 in that the noise reduction unit 131b includes a representative value determination unit 133b instead of the representative value determination unit 133. The pixel interval determination unit 130b calculates a sampling position T' in which the value after the decimal point of the result obtained by dividing the output resolution Ru by the original resolution Rx are taken into account. The sampling position T' is constituted by a first sampling position T1, a second sampling position T2, a first sampling position weight Tw1, and a second sampling position weight Tw2. The representative value determination unit 133b determines the representative value in accordance with the sampling position T' calculated by the pixel interval determination unit 133b.

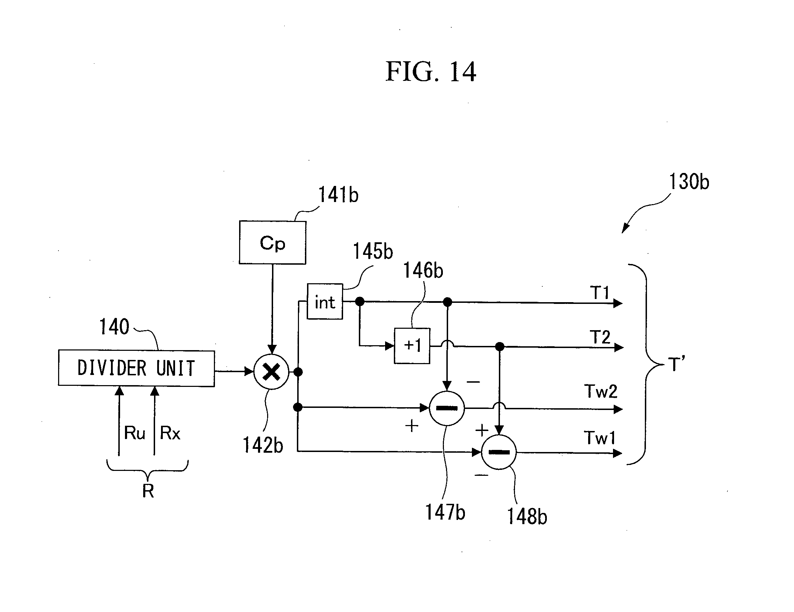

Fig. 14 is a schematic block diagram illustrating the configuration of the pixel interval determination unit 130b. In Fig. 14, components corresponding to respective components illustrated in Fig. 4 are assigned identical reference numerals (140) and description thereof is omitted. The pixel interval determination unit 130b includes a divider unit 140, a constant memory unit 141b, a multiplier unit 142b, an integer extractor unit 145b, a 1-adder unit 146b, and subtracter units 147b and 148b.

The constant memory unit 141b stores a preset constant. The multiplier unit 142b multiplies the computation result obtained by the divider unit 140 by the constant stored in the constant memory unit 141b. The integer extractor unit 145b drops the fractional portion of the computation result obtained by the multiplier unit 142b, and outputs the resulting value as the first sampling position T1. The 1-adder unit 146b adds "1" to the computation result obtained by the integer extractor unit 145b, and outputs the resulting value as the second sampling position T2. The subtracter unit 147b subtracts the computation result obtained by the integer extractor unit 145b from the computation result obtained by the multiplier unit 142b, and outputs the resulting value as the second sampling position weight Tw2. The subtracter unit 148b subtracts the computation result obtained by the multiplier unit 142b from the computation result obtained by the 1-adder unit 146b, and outputs the resulting value as the first sampling position weight Tw1.

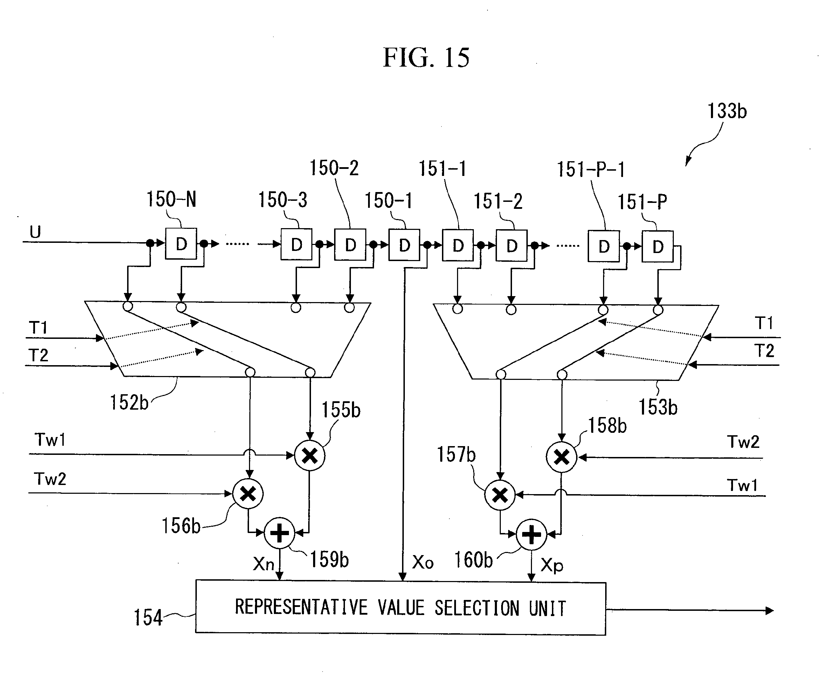

Fig. 15 is a schematic block diagram illustrating the configuration of the representative value determination unit 133b. In Fig. 15, components corresponding to respective components illustrated in Fig. 5 are assigned identical reference numerals (150-1 to 151-P and 154) and description thereof is omitted. The representative value determination unit 133b differs from the representative value determination unit 133 illustrated in Fig. 5 in that the representative value determination unit 133b includes switches 152b and 153b instead of the switches 152 and 153, respectively, and additionally includes multiplier units 155b, 156b, 157b, and 158b and adder units 159b and 160b. The switch 152b outputs two comparison signals specified by the first sampling position T1 and the second sampling position T2 from among the signal U and outputs of the data delay units 150-1 to 150-N. That is, the switch 152b outputs a pixel value of a comparison pixel which is spaced apart from the target pixel by the first sampling position T1 and which is to the right of the target pixel and a pixel value of a comparison pixel which is spaced apart from the target pixel by the second sampling position T2 and which is to the right of the target pixel.

The multiplier unit 155b multiples the pixel value output by the switch 152b in accordance with the first sampling position T1 by the first sampling position weight Tw1. The multiplier unit 156b multiplies the pixel value output by the switch 152b in accordance with the second sampling position T2 by the second sampling position weight Tw2. The adder unit 159b adds the computation result obtained by the multiplier unit 155b to the computation result obtained by the multiplier unit 156b, and outputs the resulting value as the pixel value Xp to the representative value selection unit 154.

The switch 153b outputs two comparison signals specified by the first sampling position T1 and the second sampling position T2 from among outputs of the data delay units 151-1 to 151-P. That is, the switch 153b outputs a pixel value of a comparison pixel which is spaced apart from the target pixel by the first sampling position T1 and which is to the left of the target pixel and a pixel value of a comparison pixel which is spaced apart from the target pixel by the second sampling position T2 and which is to the left of the target pixel. Accordingly, in this embodiment, because the switch 152b generates two comparison signals and the switch 153b generates two comparison signals, four comparison signals are generated in total. Thus, in this embodiment, the number of the at least one comparison signal is four.

The multiplier unit 157b multiples the pixel value output by the switch 153b in accordance with the first sampling position T1 by the first sampling position weight Tw1. The multiplier unit 158b multiplies the pixel value output by the switch 153b in accordance with the second sampling position T2 by the second sampling position weight Tw2. The adder unit 160b adds the computation result obtained by the multiplier unit 157b to the computation result obtained by the multiplier unit 158b, and outputs the resulting value as the pixel value Xn to the representative value selection unit 154.

Because the pixel interval determination unit 130b determines the sampling position in accordance with the resolution information R in this way, adjusting the sampling position is no longer needed. Thus, the noise reduction effect may be obtained in a process that is simple for the user or designer. Also, for example, in a case where a resolution ratio (Ru/Rx) of the output resolution Ru to the original resolution Rx is 2.1 and the constant memory unit 141b stores 1, the video processing circuit 123b adds a value obtained by multiplying a pixel value which is spaced apart from the pixel value $X_0$ of the target pixel by two pixels (for example, the value output by the data delay unit 151-2) by a weight 0.9 (= 3 - 2.1) to a value obtained by multiplying a pixel value which is spaced apart from the pixel value $X_0$ of the target pixel by three pixels (for example, the value output by the data delay unit 151-3) by a weight 0.1 (= 2.1 - 2).

Through this operation, the video processing circuit 123b can assign a large weight based on a difference between the second nearest integer (in this example, 3) of the resolution ratio and the resolution ratio (in this example, 2.1), to a pixel value of a first pixel that is spaced apart by the number of pixels which is equal to the nearest integer of the resolution ratio (in this example, 2). Also, the video processing circuit 123b can assign a small weight based on a difference between the nearest integer (in this example, 2) of the resolution ratio and the resolution ratio (in this example, 2.1), to a pixel value of a second pixel that is spaced apart by the number of pixels which is equal to the second nearest integer of the resolution ratio (Ru/Rx). Consequently, in a case where the resolution ratio (Ru/Rx) is not an integer, the video processing circuit 123b can approximate the pixel value (Xp or Xn) of the comparison pixel specified in accordance with the resolution ratio (Ru/Rx) in a way that reflects the actual situation better.

In this embodiment, in a case where the resolution ratio (Ru/Rx) is not an integer, the video processing circuit 123b samples four comparison pixels and performs a weighting process, and consequently can approximate the pixel values of the comparison pixels specified by the resolution ratio in a way that reflects the actual situation better. Therefore, the noise reduction effect may be increased as compared with a case where two comparison pixels are sampled and processed.

Note that the weighting process used in this embodiment is illustrative only and the video processing circuit 123b may assign a larger weight to the pixel value of the first pixel than the pixel value of the second pixel. Through this operation, the video processing circuit 123b can generate a pixel value (Xp or Xn) while putting more emphasis on the pixel value that is spaced apart by the number of pixels which is equal to the nearest integer of the resolution ratio (Ru/Rx).

[Fourth Embodiment]

A fourth embodiment of the present invention will be described below with reference to the drawings. The television receiver 1, which is a display device in accordance with this embodiment, differs from the television receiver 1 illustrated in Fig. 1 only in that the television receiver 1 of this embodiment includes a signal processing circuit 123c instead of the signal processing circuit 123.

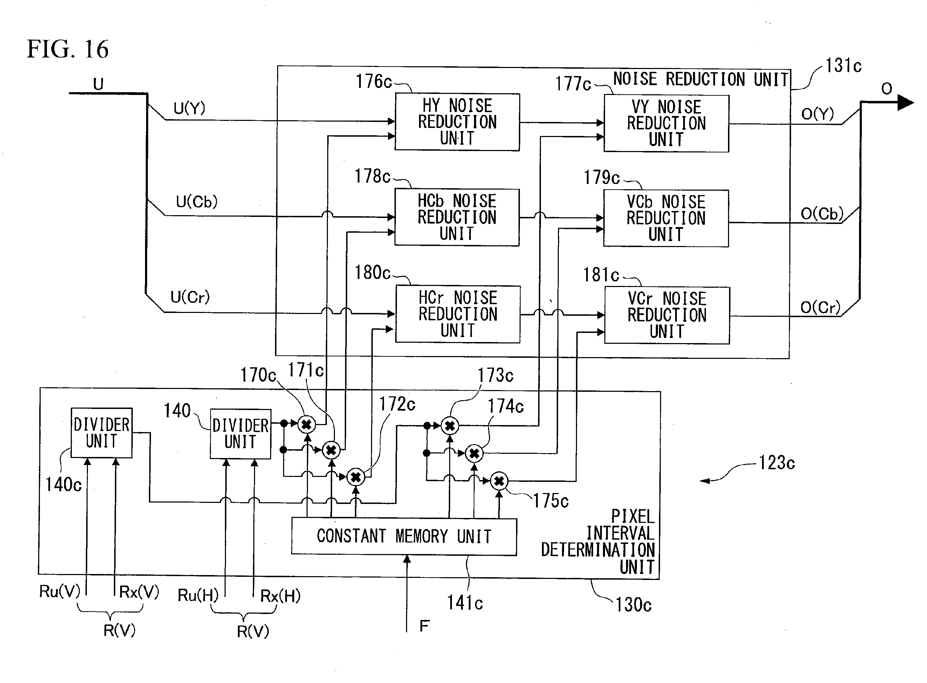

Fig. 16 is a schematic block diagram illustrating the configuration of the signal processing circuit 123c. The signal processing circuit 123c includes a pixel interval determination unit 130c and a noise reduction unit 131 c. The pixel interval determination unit 130c includes divider units 140 and 140c, a constant memory unit 141c, and multiplier units 170c, 171c, 172c, 173c, 174c, and 175c. The noise reduction unit 131 c includes an HY noise reduction unit 176c, a VY noise reduction unit 177c, an HCb noise reduction unit 178c, a VCb noise reduction unit 179c, an HCr noise reduction unit 180c, and a VCr noise reduction unit 181c.

The divider unit 140 divides a horizontal output resolution Ru(H) by a horizontal original resolution Rx(H), and outputs the computation result. The divider unit 140c divides a vertical output resolution Ru(V) by a vertical original resolution Rx(V), and outputs the computation result. The constant memory unit 141c acquires information F representing the format of the input video signal I from the CPU 118, and selects, in accordance with the information representing the format, constants to be used by the corresponding multiplier units 170c to 175c from among constants pre-stored therein. Then, the constant memory unit 141 c outputs the individual selected constants to be used in the corresponding multiplier units 170c to 175c to the corresponding multiplier units 170c to 175c.

The multiplier unit 170c multiplies the computation result obtained by the divider unit 140 by a constant used to perform horizontal noise reduction on the luminance signal among the constants selected by the constant memory unit 141 c. The multiplier unit 171c multiplies the computation result obtained by the divider unit 140 by a constant used to perform horizontal noise reduction on the blue color difference signal among the constants selected by the constant memory unit 141 c. The multiplier unit 172c multiplies the computation result obtained by the divider unit 140 by a constant used to perform horizontal noise reduction on the red color difference signal among the constants selected by the constant memory unit 141 c.

The multiplier unit 173c multiplies the computation result obtained by the divider unit 140c by a constant used to perform vertical noise reduction on the luminance signal among the constants selected by the constant memory unit 141 c. The multiplier unit 174c multiplies the computation result obtained by the divider unit 140c by a constant used to perform vertical noise reduction on the blue color difference signal among the constants selected by the constant memory unit 141 c. The multiplier unit 175c multiplies the computation result obtained by the divider unit 140c by a constant used to perform vertical noise reduction on the red color difference signal among the constants selected by the constant memory unit 141 c.

The HY noise reduction unit 176c has a configuration similar to that of the noise reduction unit 131 illustrated in Fig. 3 but differs from the noise reduction unit 131 in that the HY noise reduction unit 176c processes only the luminance signal contained in the signal U. Note that the HY noise reduction unit 176c uses, as the sampling position, the result of multiplication performed by the multiplier unit 170c. That is, the HY noise reduction unit 176c performs horizontal noise reduction on the luminance signal contained in the signal U. The VY noise reduction unit 177c has a configuration similar to that of the noise reduction unit 131a illustrated in Fig. 11 but differs from the noise reduction unit 131a in that the VY noise reduction unit 177c processes only the luminance signal whose noise has been reduced by the HY noise reduction unit 176c. Note that the VY noise reduction unit 177c uses, as the sampling position, the result of multiplication performed by the multiplier unit 173c. That is, the VY noise reduction unit 177c performs vertical noise reduction on the luminance signal on which horizontal noise reduction has been performed by the HY noise reduction unit 176c.

The HCb noise reduction unit 178c has a configuration similar to that of the noise reduction unit 131 illustrated in Fig. 3 but differs from the noise reduction unit 131 in that the HCb noise reduction unit 178c processes only the blue color difference signal contained in the signal U. Note that the HCb noise reduction unit 178c uses, as the sampling position, the result of multiplication performed by the multiplier unit 171 c. That is, the HCb noise reduction unit 178c performs horizontal noise reduction on the blue color difference signal contained in the signal U.
The VCb noise reduction unit 179c has a configuration similar to that of the noise reduction unit 131 a illustrated in Fig. 11 but differs from the noise reduction unit 131a in that the VCb noise reduction unit 179c processes only the blue color difference signal whose noise has been reduced by the HCb noise reduction unit 178c. Note that the VCb noise reduction unit 179c uses, as the sampling position, the result of multiplication performed by the multiplier unit 174c. That is, the VCb noise reduction unit 179c performs vertical noise reduction on the blue color difference signal on which horizontal noise reduction has been performed by the HCb noise reduction unit 178c.

The HCr noise reduction unit 180c has a configuration similar to that of the noise reduction unit 131 illustrated in Fig. 3 but differs from the noise reduction unit 131 in that the HCr noise reduction unit 180c processes only the red color difference signal contained in the signal U. Note that the HCr noise reduction unit 180c uses, as the sampling position, the result of multiplication performed by the multiplier unit 172c. That is, the HCr noise reduction unit 180c performs horizontal noise reduction on the red color difference signal contained in the signal U.

The VCr noise reduction unit 181 c has a configuration similar to that of the noise reduction unit 131 a illustrated in Fig. 11 but differs from the noise reduction unit 131 a in that the VCr noise reduction unit 181 c processes only the red color difference signal whose noise has been reduced by the HCr noise reduction unit 180c. Note that the VCr noise reduction unit 181 c uses, as the sampling position, the result of multiplication performed by the multiplier unit 175c. That is, the VCr noise reduction unit 181 c performs vertical noise reduction on the red color difference signal on which horizontal noise reduction has been performed by the HCr noise reduction unit 180c.

Note that the luminance signal contained in the output video signal O output by the noise reduction unit 131c is a luminance signal resulting from noise reduction performed by the VY noise reduction unit 177c. Also. The blue color difference signal contained in the output video signal O is a blue color difference signal resulting from noise reduction performed by the VCb noise reduction unit 179c. Moreover, the red color difference signal contained in the output video image O is a red color difference signal resulting from noise reduction performed by the VCr noise reduction unit 181 c.

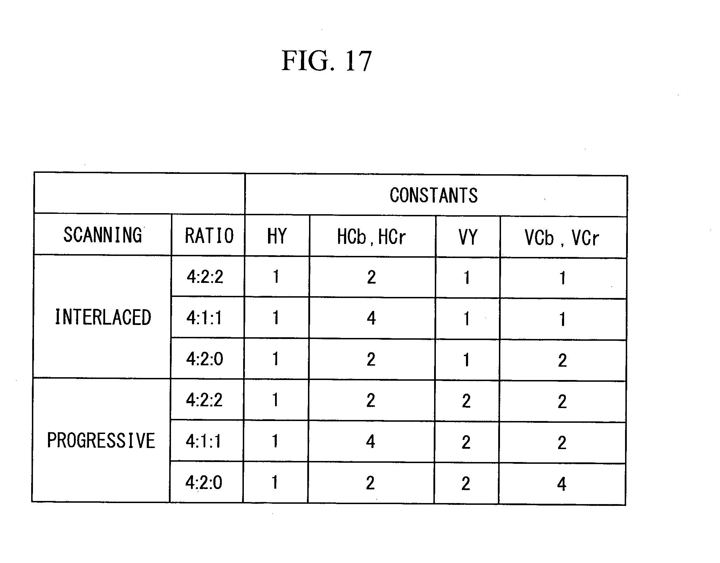

Fig. 17 is a diagram illustrating an example of the contents stored in the constant memory unit 141 c. In this example, the constant memory unit 141 stores the constant to be output to the multiplier unit 170c (a field "HY" of Fig. 17), the constant to be output to the multiplier unit 171 c and the multiplier unit 172c (fields "HCb" and "HCr" of Fig. 17, respectively), the constant to be output to the multiplier unit 173c (a field "VY" of Fig. 17), and the constant to be output to the multiplier unit 174c and the multiplier unit 175c (fields "VCb" and "VCr" of Fig. 17, respectively), in association with the information F (fields "scanning" and "ratio" of Fig. 17) representing the video format of the input video signal I. Note that the information F contains information on whether the scanning method is interlaced or progressive (the field "scanning" of Fig. 17) and information on whether the color difference format (chroma format) is 4:2:2, 4:1:1, or 4:2:0 (the field "ratio" of Fig. 17).

In a case where the scanning method is interlaced and the ratio is 4:2:2, a luminance value is assigned for every pixel and color difference values are assigned for every two horizontal pixels. Thus, the constant memory unit 141c stores "1" for "HY", "2" for "HCb and HCr", "1" for "VY", and "1" for "VCb and VCr" in association with "interlaced" for "scanning" and "4:2:2" for "ratio". In the same order, the constant memory unit 141c stores "1", "4", "1", and "1" in association with "interlaced" and "4:1:1 ". Also, the constant memory unit 141c stores "1", "2", "1 ", and "2" in association with "interlaced" and "4:2:0".

Also, the constant memory unit 141 c stores "1", "2", "2", and "2" in association with "progressive" and "4:2:2". Furthermore, the constant memory unit 141c stores "1 ", "4", "2", and "2" in association with "progressive" and "4:1:1 ". Moreover, the constant memory unit 141c stores "1", "2", "2", and "4" in association with "progressive" and "4:2:0".

Because the pixel interval determination unit 130c determines the sampling position in accordance with the resolution information R and the information representing the format of the input video signal I in this way, adjusting the sampling position is no longer needed. Thus, the noise reduction effect may be obtained in a process that is simple for the user or designer. Furthermore, the sampling positions suitably used for the luminance signal, the vertical direction of the color difference signals, and the horizontal directions of the color difference signals may be individually determined in accordance with the format of the input video signal I.

[Fifth Embodiment]

A fifth embodiment of the present invention will be described below with reference to the drawings. The television receiver 1, which is a display device in accordance with this embodiment, differs from the television receiver 1 illustrated in Fig. 1 only in that the television receiver 1 of this embodiment includes the signal processing circuit 123b instead of the signal processing circuit 123.

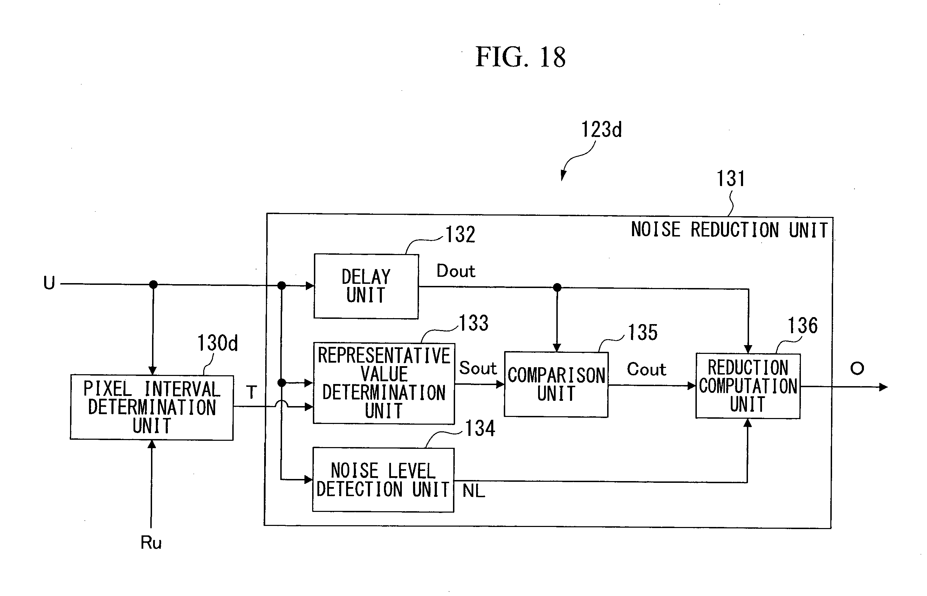

Fig. 18 is a schematic block diagram illustrating the configuration of a signal processing circuit 123d. In Fig. 18, components corresponding to respective components illustrated in Fig. 3 are assigned identical reference numerals (132 to 136) and description thereof is omitted. The signal processing circuit 123d includes a pixel interval determination unit 130d and a noise reduction unit 131. The pixel interval determination unit 130d determines the sampling position T by using the output resolution Ru supplied from the CPU 118 and the signal U.

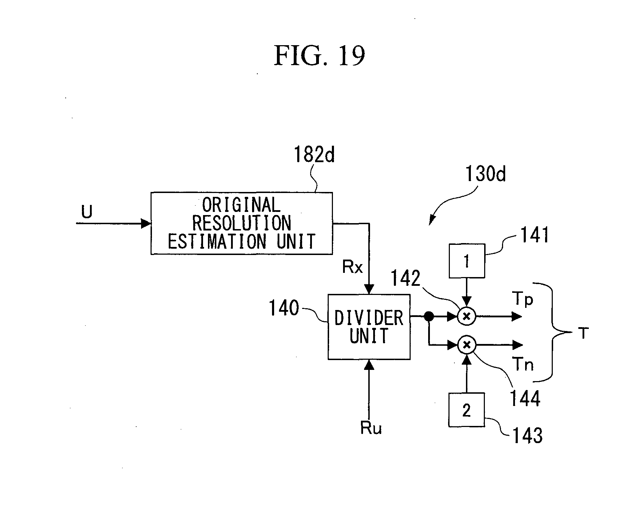

Fig. 19 is a schematic block diagram illustrating the configuration of the pixel interval determination unit 130d. In Fig. 19, components corresponding to respective components illustrated in Fig. 4 are assigned identical reference numerals (140 to 144) and description thereof is omitted. The pixel interval determination unit 130d includes an original resolution estimation unit 182d, a divider unit 140, a constant memory unit 141, a multiplier unit 142, a constant memory unit 143, and a multiplier unit 144.

The original resolution estimation unit 182d estimates a resolution that the signal U, which is an upscaled video signal, originally had before being subjected to upscaling; and outputs the result as the original resolution Rx to the divider unit 140. Specifically, the original resolution estimation unit 182d determines a spatial frequency distribution by performing Fourier transform on pixel values of pixels that are horizontally arranged in the video represented by the signal U or the like. Based on this spatial frequency distribution, the original resolution estimation unit 182d estimates the resolution that the signal U originally had before being subjected to upscaling. The frequency frequency distribution divider unit 140 divides the output resolution Ru supplied from the CPU 118 by the original resolution Rx estimated by the original resolution estimation unit 182d.

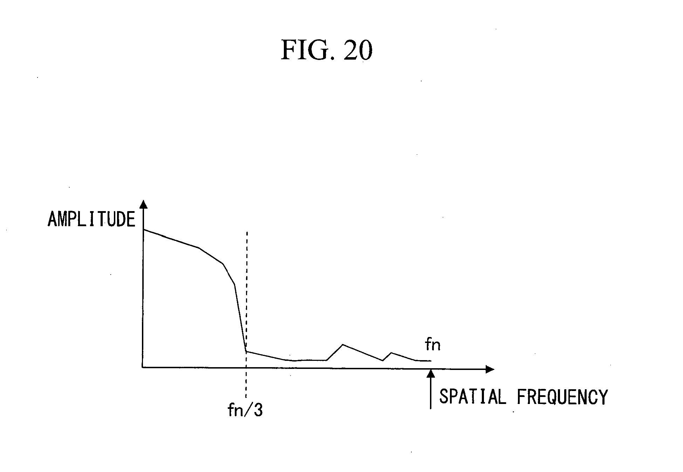

Fig. 20 is a diagram describing an operation performed by the original resolution estimation unit 182d. A graph illustrated in Fig. 20 shows a special frequency distribution of the signal U. The horizontal axis denotes the spatial frequency, whereas the vertical axis denotes the amplitude. Also in Fig. 20, fn denotes the Nyquist frequency (1/2 of the sampling frequency (= resolution)). The original resolution estimation unit 182d detects a spatial frequency at which the amplitude drops, such as a point of fn/3 in Fig. 20, in the spatial frequency distribution of the signal U. In a method for detecting this point, a point where the amplitude becomes lower than a preset threshold may be detected or an inflection point of derivative values resulting from differentiation performed on the spatial frequency distribution maybe detected. The original resolution estimation unit 182d assumes this spatial frequency at which the amplitude drops as the Nyquist frequency of an original video that has not been subjected to upscaling. The original resolution estimation unit 182d doubles this spatial frequency to calculate the resolution of the original video that has not been subjected to upscaling.

The horizontal original resolution is estimated in this embodiment because noise reduction is performed in the horizontal direction. However, in a case where noise reduction is performed in the vertical direction, the vertical original resolution may be estimated.

Because the original resolution estimation unit 182d estimates the original resolution from the signal U and the pixel interval determination unit 130d determines the sampling position in accordance with the original resolution and the output resolution, adjusting the sampling position is no longer needed. Thus, the noise reduction effect may be obtained in a process that is simple for the user or designer. Note that because the original resolution can be estimated from the signal U, an appropriate sampling position may be determined even in a case where upscaling is performed in another device and information on the original resolution is directly acquired.

[Sixth Embodiment]

A sixth embodiment of the present invention will be described below with reference to the drawings. The television receiver 1, which is a display device in accordance with this embodiment, differs from the television receiver 1 illustrated in Fig. 1 only in that the television receiver 1 of this embodiment includes a signal processing circuit 123e instead of the signal processing circuit 123.

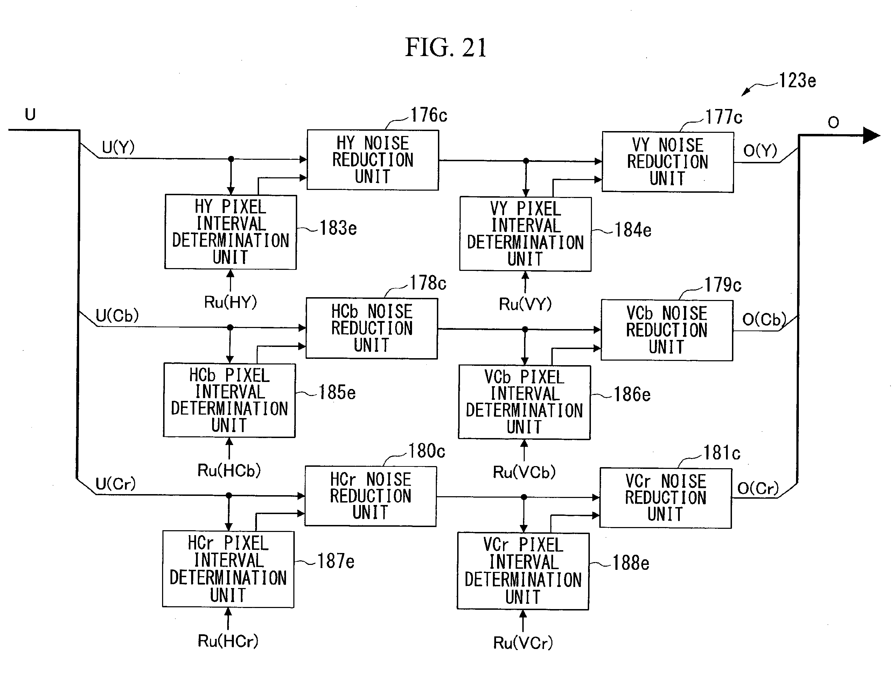

Fig. 21 is a schematic block diagram illustrating the configuration of the signal processing circuit 123e. In Fig. 21, components corresponding to respective components illustrated in Fig. 16 are assigned identical reference numerals (176c to 181 c) and description thereof is omitted. The signal processing circuit 123e includes an HY noise reduction unit 176c, a VY noise reduction unit 177c, an HCb noise reduction unit 178c, a VCb noise reduction unit 179c, an HCr noise reduction unit 180c, a VCr noise reduction unit 181 c, an HY pixel interval determination unit 183e, a VY pixel interval determination unit 184e, an HCb pixel interval determination unit 185e, a VCb pixel interval determination unit 186e, an HCr pixel interval determination unit 187e, and a VCr pixel interval determination unit 188e.

The HY pixel interval determination unit 183e estimates a horizontal original resolution Rx(HY) of the luminance signal from the signal U; computes the horizontal sampling position for the luminance signal in accordance with the original resolution Rx(HY) and a horizontal output resolution Ru(HY) of the luminance signal, the horizontal output resolution Ru(HY) being supplied from the CPU 118 (Fig. 1); and outputs the resulting sampling position to the HY noise reduction unit 176c. The VY pixel interval determination unit 184e estimates a vertical original resolution Rx(VY) of the luminance signal from the signal U; computes the vertical sampling position for the luminance signal in accordance with the original resolution Rx(VY) and a vertical output resolution Ru(VY) of the luminance signal, the vertical output resolution Ru(VY) being supplied from the CPU 118; and outputs the resulting sampling position to the VY noise reduction unit 177c.

The HCb pixel interval determination unit 185e estimates a horizontal original resolution Rx(HCb) of the blue color difference signal from the signal U; computes the horizontal sampling position for the blue color difference signal in accordance with the original resolution Rx(HCb) and a horizontal output resolution Ru(HCb) of the blue color difference signal, the horizontal output resolution Ru(HCb) being supplied from the CPU 118; and outputs the resulting sampling position to the HCb noise reduction unit 178c. The VCb pixel interval determination unit 186e estimates a vertical original resolution Rx(VCb) of the blue color difference signal from the signal U; computes the vertical sampling position for the blue color difference signal in accordance with the original resolution Rx(VCb) and a vertical output resolution Ru(VCb) of the blue color difference signal, the vertical output resolution Ru(VCb) being supplied from the CPU 118; and outputs the resulting sampling position to the VCb noise reduction unit 179c.

The HCr pixel interval determination unit 187e estimates a horizontal original resolution Rx(HCr) of the red color difference signal from the signal U; computes the horizontal sampling position for the red color difference signal in accordance with the original resolution Rx(HCr) and a horizontal output resolution Ru(HCr) of the red color difference signal, the horizontal output resolution Ru(HCr) being supplied from the CPU 118; and outputs the resulting sampling position to the HCr noise reduction unit 180c. The VCr pixel interval determination unit 188e estimates a vertical original resolution Rx(VCr) of the red color difference signal from the signal U; computes the vertical sampling position for the red color difference signal in accordance with the original resolution Rx(VCr) and a vertical output resolution Ru(VCr) of the red color difference signal, the vertical output resolution Ru(VCr) being supplied from the CPU 118; and outputs the resulting sampling position to the VCr noise reduction unit 181 c.

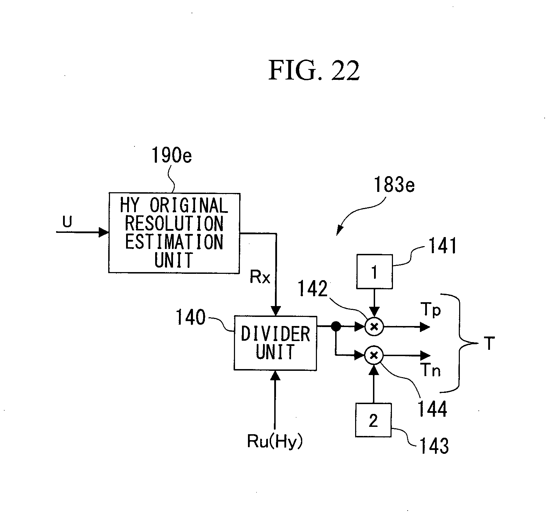

The pixel interval determination units 183e and 188e have substantially identical configurations. Thus, the configuration of the pixel interval determination unit 183e will be illustrated herein and the other pixel interval determination units will be described regarding their differences from the pixel interval determination unit 183e. Fig. 22 is a schematic block diagram illustrating the configuration of the pixel interval determination unit 183e. In Fig. 22, components corresponding to respective components illustrated in Fig. 19 are assigned identical reference numerals (140 to 144) and description thereof is omitted. The pixel interval determination unit 183e includes an HY original resolution estimation unit 190e, a divider unit 140, a constant memory unit 141, a multiplier unit 142, a constant memory unit 143, and a multiplier unit 144.

The HY original resolution estimation unit 190e estimates a horizontal resolution of the luminance value that the original image not subjected to upscaling had, from the signal U, in a manner similar to that used by the original resolution estimation unit 182d; and outputs the result as the original resolution Rx to the divider unit 140. The divider unit 140 divides the output resolution Ru(HY) that is the horizontal resolution of the luminance value of the output video signal O and is supplied from the CPU 118 by the original resolution Rx.

The pixel interval determination unit 184e includes a VY original resolution estimation unit instead of the HY original resolution estimation unit 190e. The VY original resolution estimation unit estimates a vertical resolution of the luminance value of the original image not subjected to upscaling, from the signal U; and outputs the result as the original resolution Rx to the divider unit 140. In addition, the CPU 118 supplies the divider unit 140 of the pixel interval determination unit 184e with, as the output resolution Ru, the output resolution Ru(VY) that is the vertical resolution of the luminance value of the output video signal O.

The pixel interval determination unit 185e includes an HCb original resolution estimation unit instead of the HY original resolution estimation unit 190e. The HCb original resolution estimation unit estimates a horizontal resolution of the blue color difference value of the original image not subjected to upscaling, from the signal U; and outputs the result as the original resolution Rx to the divider unit 140. In addition, the CPU 118 supplies the divider unit 140 of the pixel interval determination unit 185e with, as the output resolution Ru, the output resolution Ru(HCb) that is the horizontal resolution of the blue color difference value of the output video signal O.

The pixel interval determination unit 186e includes a VCb original resolution estimation unit instead of the HY original resolution estimation unit 190e. The VCb original resolution estimation unit estimates a vertical resolution of the blue color difference value of the original image not subjected to upscaling, from the signal U; and outputs the result as the original resolution Rx to the divider unit 140. In addition, the CPU 118 supplies the divider unit 140 of the pixel interval determination unit 186e with, as the output resolution Ru, the output resolution Ru(VCb) that is the vertical resolution of the blue color difference value of the output video signal O.

The pixel interval determination unit 187e includes an HCr original resolution estimation unit instead of the HY original resolution estimation unit 190e. The HCr original resolution estimation unit estimates a horizontal resolution of the red color difference value of the original image not subjected to upscaling, from the signal U; and outputs the result as the original resolution Rx to the divider unit 140. In addition, the CPU 118 supplies the divider unit 140 of the pixel interval determination unit 187e with, as the output resolution Ru, the output resolution Ru(HCr) that is the horizontal resolution of the red color difference value of the output video signal O.

The pixel interval determination unit 188e includes a VCr original resolution estimation unit instead of the HY original resolution estimation unit 190e. The VCr original resolution estimation unit estimates a vertical resolution of the red color difference value of the original image not subjected to upscaling, from the signal U; and outputs the result as the original resolution Rx to the divider unit 140. In addition, the CPU 118 supplies the divider unit 140 of the pixel interval determination unit 188e with, as the output resolution Ru, the output resolution Ru(VCb) that is the vertical resolution of the red color difference value of the output video signal O.

In this way, the horizontal and vertical original resolutions are estimated for the corresponding luminance and color difference values from the signal U, and the horizontal and vertical sampling positions are determined for the corresponding luminance and color difference values in accordance with the original resolution and the output resolution. Thus, adjusting the sampling position is no longer needed. As a result, the noise reduction effect may be obtained in a process that is simple for the user or designer. Note that because the original resolution can be estimated from the signal U, an appropriate sampling position may be determined even in a case where upscaling is performed in another device and information on the original resolution is directly acquired.

[Seventh Embodiment]

A seventh embodiment of the present invention will be described below with reference to the drawing. The television receiver 1, which is a display device in accordance with this embodiment, uses a bilateral filter limitedly applied to three pixels that are one dimensionally arranged. The configuration of the television receiver 1 of this embodiment differs from the television receiver 1 illustrated in Fig. 1 only in that the television receiver 1 of this embodiment includes a noise reduction unit 131f instead of the noise reduction unit 131.

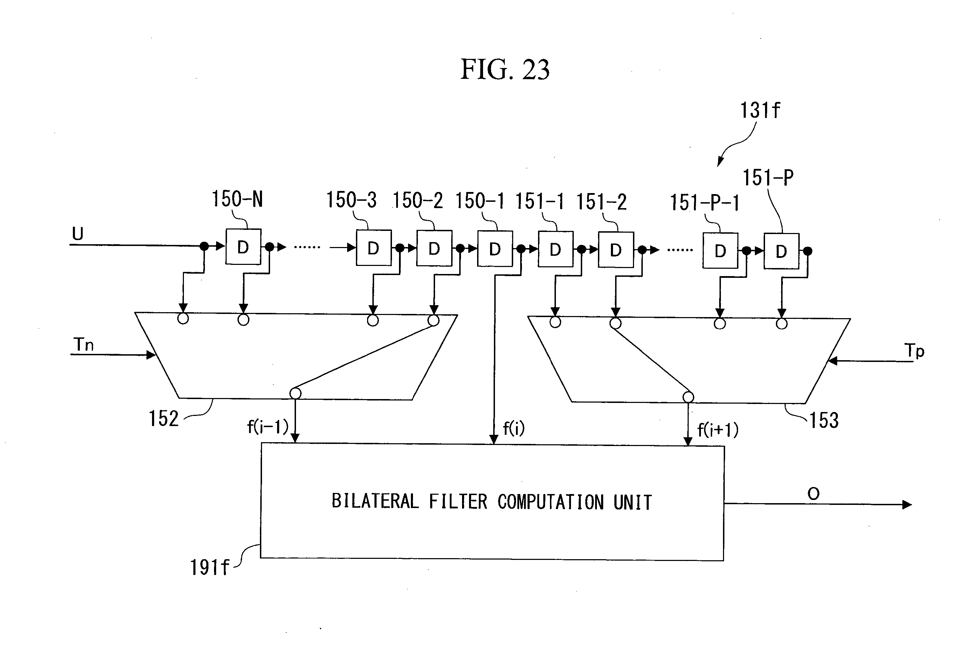

Fig. 23 is a schematic block diagram illustrating the configuration of the noise reduction unit 131f. In Fig. 23, components corresponding to respective components illustrated in Fig. 5 are assigned identical reference numerals (150-1 to 150-N, 151-1 to 151-P, 152, and 153) and description thereof is omitted. The noise reduction unit 131 f includes data delay units 150-1 to 150-N, data delay units 151-1 to 151-P, switches 152 and 153, and a bilateral filter computation unit 191f.

The bilateral filter computation unit 191 f performs noise reduction by using Expression (3) below, which is a bilateral filter; and outputs the computation result as the output video signal O.

[Expression 3]

$$g(i) = \frac{\sum_{m=-1}^{1} f(i+m) \exp\left(-\frac{m^2}{2\sigma_1^2}\right) \exp\left(-\frac{f(i)^2 - f(i+m)^2}{2\sigma_2^2}\right)}{\sum_{m=-1}^{1} \exp\left(-\frac{m^2}{2\sigma_1^2}\right) \exp\left(-\frac{f(i)^2 - f(i+m)^2}{2\sigma_2^2}\right)} \qquad \cdots (3)$$

Here, f(i) is an output of the data delay unit 150-1, that is, a pixel value of the target pixel. Also, f(i-1) is an output of the switch 152, that is, a pixel value of the pixel which is spaced apart from the target pixel by the right sampling position Tn and which is to the right of the target pixel. Moreover, f(i+1) is an output of the switch 153, that is, a pixel value of a pixel which is spaced apart from the target pixel by the left sampling position Tp and which is to the left of the target pixel. Also, $\sigma_1$ and $\sigma_2$ are preset parameters each determining a range of pixels to be processed. Note that the greater the values of $\sigma_1$ and $\sigma_2$ become, the wider the range of pixels to be processed becomes.

Also in this embodiment, because the pixel interval determination unit 130 determines the bilateral filter sampling position in accordance with the resolution information R, adjusting the sampling position is no longer needed. Thus, the noise reduction effect may be obtained in a process that is simple for the user or designer.

Note that a bilateral filer is a filter that concentrates low-frequency components to high-frequency components just like the median filter. A filter, such as a bilateral filter, that concentrates low-frequency components to high-frequency components may be used in each of the embodiments described above, instead of the median filter.

Also, a video signal is subjected to noise reduction in each of the embodiments described above. However, other signals, such as an audio signal, may be subjected to noise reduction.

Moreover, the number of the at least one comparison signal is two or four in each of the embodiments. However, the number of the at least one comparison signal is not limited to these values and may take any value that is equal to one or greater.

Also, the functions of the video processing circuit described in each of the above embodiments may be implemented by recording a program for implementing the functions of the video processing circuit on a computer readable recording medium and causing a computer system to load the program recorded on this recording medium and to execute the program. Note that, the "computer system" used herein includes the OS and hardware such as a peripheral device.

Moreover, examples of the "computer readable recording medium" include a portable medium, such as a flexible disk, a magneto-optical disk, a ROM, or a CD-ROM; or a storage device, such as a hard disk built in the computer system. Furthermore, examples of the "computer readable recording medium" include a medium that dynamically holds the program for a short period of time like a communication line used when the program is transmitted via a network such as the Internet or the communication line such as a telephone line, or a medium that holds the program for a certain period of time such as a nonvolatile memory built in a computer system that serves as a server or client in this case. Also, the program may be a program that implements some of the above functions or may be a program that can implement the above functions when the program is used in conjunction with a program that has already been recorded in the computer system.

While the embodiments of this invention have been described in detail above with reference to the drawings, concrete configurations are not limited to these embodiments and thus design modifications or the like within the scope not deviating from the gist of this invention are also encompassed.

DESCRIPTION OF REFERENCE NUMERALS

1 ··· television receiver
11a to 11c ··· HDMI (registered trademark) input terminal
11d ··· switch
100 ··· HDMI (registered trademark) receiver
101a ··· video input terminal
101b ··· audio input terminal
102 ··· BD drive
103 ··· tuner
104 ··· IP broadcasting tuner
105 ··· satellite broadcasting tuner
106 ··· OSD generator
107 ··· video selector
108 ··· video processing circuit
109 ··· LCD controller
110 ··· LCD
111 ··· audio selector
112 ··· audio processor
113 ··· digital amplifier
114 ··· speaker
115 ... LAN I/F
116 ··· ROM
117 ··· RAM
118 ··· CPU
119 ··· infrared receiver
120 ··· I/P conversion circuit
121 ··· switch
122 ··· scaler
123, 123a, 123b, 123d, 123e ··· signal processing circuit
130, 130a, 130b, 130c, 130d ··· pixel interval determination unit
131, 131a, 131b, 131c, 131f ··· noise reduction unit
132,132a ··· delay unit
133, 133a, 133b ··· representative value determination unit
134 ··· noise level detection unit
135 ··· comparison unit
136 ··· reduction computation unit
140, 140c ··· divider unit
141, 143, 141b, 141c ··· constant memory unit
142,144,142b ··· multiplier unit
145b ··· integer extractor unit
146b ··· 1-adder unit
147b, 148b ··· subtracter unit
150-1 to 150-N, 151-1 to 151-P ··· data delay unit
150a-1 to 150a-N, 151a-1 to 151a-P ··· line delay unit
152,153,152b,153b ··· switch
154 ··· representative value selection unit
155 ··· adder unit
156 ··· subtracter unit
157 ··· selection unit
155b,156b,157b,158b ··· multiplier unit
159b, 160b ··· adder unit
170c, 171c, 172c, 173c, 174c, 175c ··· multiplier unit
176c ··· HY noise reduction unit
177c ··· VY noise reduction unit
178c ··· HCb noise reduction unit

179c ⋯ VCb noise reduction unit
180c ⋯ HCr noise reduction unit
181c ⋯ VCr noise reduction unit
182d ⋯ original resolution estimation unit
183e ⋯ HY pixel interval determination unit
184e ⋯ VY pixel interval determination unit
185e ⋯ HCb pixel interval determination unit
186e ⋯ VCb pixel interval determination unit
187e ⋯ HCr pixel interval determination unit
188e ⋯ VCr pixel interval determination unit
190e ⋯ HY original resolution estimation unit
191f⋯ bilateral filter computation unit

**Claims**

1. A signal processing device, comprising:

   a pixel interval determination unit configured to determine, in accordance with information regarding a resolution of an input signal, a pixel interval between a pixel corresponding to a target signal contained in the input signal and at least one pixel corresponding to at least one comparison signal that is contained in the input signal and is different from the target signal; and
   a noise reduction unit configured to reduce a noise component in the target signal in accordance with the target signal and the at least one comparison signal.

2. The signal processing device according to Claim 1, wherein the input signal is a signal that has undergone upscaling.

3. The signal processing device according to Claim 1 or 2, wherein the resolution of the input signal is a horizontal resolution or vertical resolution of an image represented by the input signal.

4. The signal processing device according to any one of Claims 1 to 3, wherein the number of the at least one comparison signal is two or four.

5. The signal processing device according to any one of Claims 1 to 4, wherein the pixel interval determination unit determines the pixel interval in accordance with an original resolution that is a resolution of the input signal before the input signal has undergone the upscaling and an output resolution that is a resolution of the input signal after the input signal has undergone the upscaling.

6. The signal processing device according to Claim 5, further comprising: an original resolution estimation unit configured to estimate the original resolution in accordance with a frequency distribution of the input signal.

7. The signal processing device according to Claim 6,
   wherein the input signal is a video signal,
   wherein the original resolution estimation unit estimates the original resolution in accordance with a frequency distribution in a horizontal direction of an image represented by the input signal, and
   wherein the pixel corresponding to the comparison signal is a pixel that is spaced apart from the pixel corresponding to the target signal in the horizontal direction.

8. The signal processing device according to Claim 6,
   wherein the input signal is a video signal,
   wherein the original resolution estimation unit estimates the original resolution in accordance with a frequency distribution in a vertical direction of an image represented by the input signal, and
   wherein the pixel corresponding to the comparison signal is a pixel that is spaced apart from the pixel corresponding to the target pixel in the vertical direction.

9. The signal processing device according to Claim 6,
   wherein the input signal is a video signal containing a luminance signal,
   wherein the original resolution estimation unit estimates the original resolution in accordance with a frequency distribution of the luminance signal, and
wherein the noise reduction unit reduces a noise component in a luminance value of the target signal by using a luminance value of the comparison signal.

10. The signal processing device according to Claim 6,
wherein the input signal is a video signal containing a color difference signal,
wherein the original resolution estimation unit estimates the original resolution in accordance with a frequency distribution of the color difference signal, and
wherein the noise reduction unit reduces a noise component in a color difference value of the target signal by using a color difference value of the comparison signal.

11. The signal processing device according to Claim 5,
wherein the input signal is a video signal, and
wherein the pixel interval determination unit determines the pixel interval in accordance with a video format of the input signal in addition to the original resolution that is a resolution of the input signal before the input signal has undergone the upscaling and the output resolution that is a resolution of the input signal after the input signal has undergone the upscaling.

12. A signal processing method comprising:

a first process of determining, with a pixel interval determination unit, in accordance with information regarding a resolution of an input signal, a pixel interval between a pixel corresponding to a target signal contained in the input signal and at least one pixel corresponding to at least one comparison signal that is contained in the input signal and is different from the target signal; and
a second process of reducing, with a noise reduction unit, a noise component in the target signal in accordance with the target signal and the at least one comparison signal.

13. A signal processing program causing a computer to execute:

a pixel interval determination step of determining, in accordance with information regarding a resolution of an input signal, a pixel interval between a pixel corresponding to a target signal contained in the input signal and at least one pixel corresponding to at least one comparison signal that is contained in the input signal and is different from the target signal; and
a noise reduction step of reducing a noise component in the target signal in accordance with the target signal and the at least one comparison signal.

14. A display device comprising:

a pixel interval determination unit configured to determine, in accordance with information regarding a resolution of an input signal, a pixel interval between a pixel corresponding to a target signal contained in the input signal and at least one pixel corresponding to at least one comparison signal that is contained in the input signal and is different from the target signal;
a noise reduction unit configured to reduce a noise component in the target signal in accordance with the target signal and the at least one comparison signal; and
a display unit that displays an image represented by a signal obtained as a result of the noise reduction unit reducing the noise component.

# FIG. 1

EP 2 632 145 A1

# FIG. 2

EP 2 632 145 A1

# FIG. 3

EP 2 632 145 A1

EP 2 632 145 A1

FIG. 4

24

# FIG. 5

EP 2 632 145 A1

# FIG. 6

FIG. 7

# FIG. 8

# FIG. 9

EP 2 632 145 A1

# FIG. 10

# FIG. 11

EP 2 632 145 A1

## FIG. 12

FIG. 13

# FIG. 14

FIG. 15

**FIG. 16**

EP 2 632 145 A1

FIG. 17

| SCANNING | RATIO | CONSTANTS | | | |
|---|---|---|---|---|---|
| | | HY | HCb, HCr | VY | VCb, VCr |
| INTERLACED | 4:2:2 | 1 | 2 | 1 | 1 |
| | 4:1:1 | 1 | 4 | 1 | 1 |
| | 4:2:0 | 1 | 2 | 1 | 2 |
| PROGRESSIVE | 4:2:2 | 1 | 2 | 2 | 2 |
| | 4:1:1 | 1 | 4 | 2 | 2 |
| | 4:2:0 | 1 | 2 | 2 | 4 |

EP 2 632 145 A1

FIG. 18

EP 2 632 145 A1

123d

131

NOISE REDUCTION UNIT

132

DELAY UNIT

Dout

U

130d

PIXEL INTERVAL DETERMINATION UNIT

T

133

REPRESENTATIVE VALUE DETERMINATION UNIT

Sout

135

COMPARISON UNIT

Cout

136

REDUCTION COMPUTATION UNIT

O

134

NOISE LEVEL DETECTION UNIT

NL

Ru

# FIG. 19

FIG. 20

AMPLITUDE

fn

SPATIAL FREQUENCY

fn/3

## FIG. 21

EP 2 632 145 A1

# FIG. 22

# FIG. 23

EP 2 632 145 A1

# FIG. 24

<table>
<tr><td colspan="2" align="center">**INTERNATIONAL SEARCH REPORT**</td><td colspan="2">International application No.<br>PCT/JP2011/077326</td></tr>
</table>

**A. CLASSIFICATION OF SUBJECT MATTER**
*H04N5/21*(2006.01)i, *G09G3/20*(2006.01)i, *G09G5/00*(2006.01)i, *G09G5/36*
(2006.01)i, *G09G5/391*(2006.01)i

According to International Patent Classification (IPC) or to both national classification and IPC

**B. FIELDS SEARCHED**

Minimum documentation searched (classification system followed by classification symbols)
H04N5/21, G09G3/20, G09G5/00, G09G5/36, G09G5/391

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 7-250264 A  (Nippon Hoso Kyokai),<br>26 September 1995 (26.09.1995),<br>paragraphs [0028] to [0035]; fig. 1 to 2<br>(Family: none) | 1-3,12-14<br>4-11 |
| Y<br>A | JP 2004-201207 A  (Nikon Corp.),<br>15 July 2004 (15.07.2004),<br>paragraph [0078]<br>(Family: none) | 1-3,12-14<br>4-11 |
| Y | JP 2009-21868 A  (Sony Corp.),<br>29 January 2009 (29.01.2009),<br>paragraphs [0026] to [0027]; fig. 1(B)<br>(Family: none) | 2-3,14 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    15 February, 2012 (15.02.12) | Date of mailing of the international search report<br>    28 February, 2012 (28.02.12) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/077326

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 10-248027 A  (Hitachi, Ltd.),<br>14 September 1998 (14.09.1998),<br>paragraphs [0018] to [0026]; fig. 1<br>(Family: none) | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010267697 A

- JP 7250264 A